# EUROPEAN PATENT APPLICATION

(11) **EP 4 783 711 A1**
(43) Date of publication of application: **29.07.2026**
(21) Application number: 24867362.6
(22) Date of filing: 13.09.2024
(51) Int. Cl.: H04W 74/00

(54) **INFORMATION SENDING METHOD AND APPARATUS, INFORMATION RECEIVING METHOD AND APPARATUS, TERMINAL, AND NETWORK SIDE DEVICE**

(30) Priority: 20.09.2023 CN 202311217999
(71) Applicant: Vivo Mobile Communication Co., Ltd., Dongguan, Guangdong 523863 (CN)
(72) Inventor: BAO, Wei, Dongguan, Guangdong 523863 (CN); MO, Yitao, Dongguan, Guangdong 523863 (CN)
(74) Representative: Walaski, Jan Filip
(86) International application number: PCT/CN2024/118690
(87) International publication number: WO 2025/060953

(57) **Abstract**

The present application relates to the technical field of communications, and discloses an information sending method and apparatus, an information receiving method and apparatus, a terminal, and a network side device. The information sending method in embodiments of the present application comprises: a terminal sends a media access control (MAC) protocol data unit (PDU) to a network side device, the MAC PDU comprising a target MAC subPDU; wherein first indication information in a MAC subheader of the target MAC subPDU is used for indicating the type of the target MAC subPDU, the first indication information is indication information occupying 1 bit, and the type of the target MAC subPDU comprises at least one of the following: a MAC subPDU corresponding to a common control channel (CCCH), and a MAC subPDU comprising a cell radio network temporary identifier (C-RNTI) MAC control element (CE).

## Description

### CROSS-REFERENCE TO RELATED APPLICATIONS

This application claims priority to Chinese Patent Application No. 202311217999.0, filed on September 20, 2023, which is incorporated herein by reference in its entirety.

### TECHNICAL FIELD

This application pertains to the field of communication technology, and specifically relates to an information sending method and apparatus, an information receiving method and apparatus, a terminal, and a network-side device.

### BACKGROUND

In the related art, during the random access channel (Random Access Channel, RACH) procedure, the terminal sends a medium access control (Medium Access Control, MAC) protocol data unit (Protocol Data Unit, PDU) to the network-side device. When the MAC PDU is Msg3 in the 4-step RACH procedure or MsgA in the 2-step RACH procedure, the MAC PDU includes at least one MAC subPDU (subPDU) corresponding to a common control channel (Common Control Channel, CCCH), or a MAC subPDU containing a cell radio network temporary identifier (Cell Radio Network Temporary Identifier, C-RNTI) MAC control element (Control Element, CE). The MAC PDU indicates the MAC subPDU corresponding to the CCCH and the MAC subPDU containing the C-RNTI MAC CE through different logical channel identities (Logical Channel Identity, LCID), resulting in high consumption of LCID resources.

### SUMMARY

Embodiments of this application provide an information sending method and apparatus, an information receiving method and apparatus, a terminal, and a network-side device, which can solve the problem of high consumption of LCID resources.

According to a first aspect, an information sending method is provided, including:
sending, by a terminal to a network-side device, a medium access control MAC protocol data unit PDU, the MAC PDU including a target MAC subPDU; where
first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

According to a second aspect, an information receiving method is provided, including:
receiving, by a network-side device, a MAC PDU sent by a terminal, the MAC PDU including a target MAC subPDU; and
determining, by the network-side device, a type of the target MAC subPDU based on first indication information in a MAC subheader of the target MAC subPDU, where the first indication information is indication information occupying 1 bit; and the type of the target MAC subPDU includes at least one of the following: a MAC subPDU corresponding to a CCCH; and a MAC subPDU containing a C-RNTI MAC CE.

According to a third aspect, an information sending apparatus is provided, where a terminal includes the information sending apparatus, and the apparatus includes:
a sending module, configured to send a medium access control MAC protocol data unit PDU to a network-side device, the MAC PDU including a target MAC subPDU; where
first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

According to a fourth aspect, an information receiving apparatus is provided, where a network-side device includes the information receiving apparatus, and the apparatus includes:
a receiving module, configured to receive a MAC PDU sent by a terminal, the MAC PDU including a target MAC subPDU; and
a determining module, configured to determine a type of the target MAC subPDU based on first indication information in a MAC subheader of the target MAC subPDU, where the first indication information is indication information occupying 1 bit; and the type of the target MAC subPDU includes at least one of the following: a MAC subPDU corresponding to a CCCH; and a MAC subPDU containing a C-RNTI MAC CE.

According to a fifth aspect, a terminal is provided, where the terminal includes a processor and a memory, the memory stores a program or instructions capable of running on the processor, and when the program or instructions are executed by the processor, the steps of the method according to the first aspect are implemented.

According to a sixth aspect, a network-side device is provided, where the network-side device includes a processor and a memory, the memory stores a program or instructions capable of running on the processor, and when the program or instructions are executed by the processor, the steps of the method according to the second aspect are implemented.

According to a seventh aspect, a terminal is provided, including a processor and a communication interface, where the communication interface is configured to:
send a medium access control MAC protocol data unit PDU to a network-side device, the MAC PDU including a target MAC subPDU; where
first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

According to an eighth aspect, a network-side device is provided, including a processor and a communication interface, where the communication interface is configured to: receive a MAC PDU sent by a terminal, the MAC PDU including a target MAC subPDU; and
the processor is configured to: determine a type of the target MAC subPDU based on first indication information in a MAC subheader of the target MAC subPDU, where the first indication information is indication information occupying 1 bit; and the type of the target MAC subPDU includes at least one of the following: a MAC subPDU corresponding to a CCCH; and a MAC subPDU containing a C-RNTI MAC CE.

According to a ninth aspect, an information transceiving system is provided, including: a terminal and a network-side device, where the terminal can be configured to perform the steps of the method according to the first aspect, and the network-side device can be configured to perform the steps of the method according to the second aspect.

According to a tenth aspect, a readable storage medium is provided, where the readable storage medium stores a program or instructions, and when the program or instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the second aspect.

According to a twelfth aspect, a computer program/program product is provided, where the computer program/program product is stored in a storage medium, the computer program/program product is executed by at least one processor to implement the steps of the method according to the first aspect or the steps of the method according to the second aspect.

In the embodiments of this application, a terminal sends a medium access control MAC protocol data unit PDU to a network-side device, the MAC PDU including a target MAC subPDU; where first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE. In this way, the type of the MAC subPDU is indicated by the first indication information occupying 1 bit, supporting indication of the MAC subPDU corresponding to the CCCH or the MAC subPDU containing the C-RNTI MAC CE through the first indication information occupying 1 bit, with no need to indicate the MAC subPDU corresponding to the CCCH or the MAC subPDU containing the C-RNTI MAC CE through an LCID, thereby reducing the consumption of LCID resources.

### BRIEF DESCRIPTION OF DRAWINGS

FIG. 1 is a block diagram of a wireless communication system to which an embodiment of this application is applicable;
FIG. 2 is a first schematic diagram of sending of a random access message in the related art;
FIG. 3 is a second schematic diagram of sending of a random access message in the related art;
FIG. 4 is a first schematic diagram of a format of a MAC subPDU in the related art;
FIG. 5 is a second schematic diagram of a format of a MAC subPDU in the related art;
FIG. 6 is a schematic diagram of a format of a MAC PDU in the related art;
FIG. 7 is a third schematic diagram of a format of a MAC subPDU in the related art;
FIG. 8 is a fourth schematic diagram of a format of a MAC subPDU in the related art;
FIG. 9 is a fifth schematic diagram of a format of a MAC subPDU in the related art;
FIG. 10 is a third schematic diagram of sending of a random access message in the related art;
FIG. 11 is a flowchart of an information sending method according to an embodiment of this application;
FIG. 12 is a flowchart of an information receiving method according to an embodiment of this application;
FIG. 13 is a first schematic diagram of a format of a subheader of a MAC subPDU according to an embodiment of this application;
FIG. 14 is a second schematic diagram of a format of a subheader of a MAC subPDU according to an embodiment of this application;
FIG. 15 is a third schematic diagram of a format of a subheader of a MAC subPDU according to an embodiment of this application;
FIG. 16 is a fourth schematic diagram of a format of a subheader of a MAC subPDU according to an embodiment of this application;
FIG. 17 is a fifth schematic diagram of a format of a subheader of a MAC subPDU according to an embodiment of this application;
FIG. 18 is a schematic structural diagram of an information sending apparatus according to an embodiment of this application;
FIG. 19 is a schematic structural diagram of an information receiving apparatus according to an embodiment of this application;
FIG. 20 is a schematic structural diagram of a communication device according to an embodiment of this application;
FIG. 21 is a schematic structural diagram of a terminal according to an embodiment of this application; and
FIG. 22 is a schematic structural diagram of a network-side device according to an embodiment of this application.

### DESCRIPTION OF EMBODIMENTS

The technical solutions in the embodiments of this application will be clearly described below in conjunction with the accompanying drawings in the embodiments of this application. Apparently, the described embodiments are only some rather than all of the embodiments of this application. Based on the embodiments in this application, all other embodiments obtained by those of ordinary skill in the art fall within the protection scope of this application.

The terms "first", "second", and the like in the specification and claims of this application are used to distinguish similar objects and are not used to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, the "or" in the specification and claims indicates at least one of the connected objects. For example, "A or B" encompasses three scenarios. That is, scenario one: A is included and B is not included; scenario two: B is included and A is not included; and scenario three: both A and B are included. The term "indication" in the specification and claims of this application can be either an explicit indication or an implicit indication. The explicit indication can be understood as the sender explicitly informing the receiver in the sent indication of the operation or requested result that needs to be performed. The implicit indication can be understood as the receiver making a judgment based on the indication sent by the sender and determining the operation or requested result that needs to be performed based on the judgment result.

It is worth pointing out that the technology described in the embodiments of this application is not limited to long term evolution (Long Term Evolution, LTE)/LTE evolution (LTE-Advanced, LTE-A) systems, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA) and other systems. The terms "system" and "network" in the embodiments of this application are often used interchangeably, and the described technology can be used in the above-mentioned systems and radio technologies, and can also be used in other systems and radio technologies. The following description describes the new radio (New Radio, NR) system for exemplary purposes, and uses NR terms in most of the following descriptions, but these technologies can also be applied to applications other than the NR system, such as the 6^{th} Generation (6^{th} Generation, 6G) communication system.

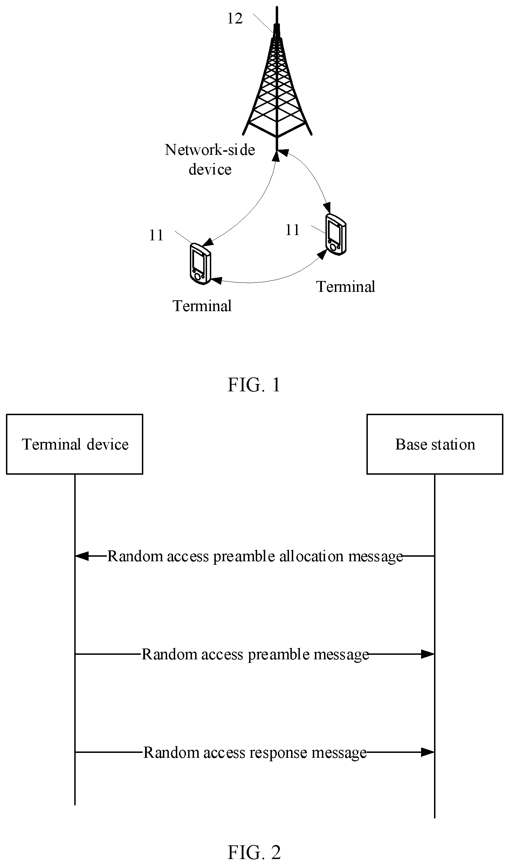

FIG. 1 is a block diagram of a wireless communication system to which an embodiment of this application is applicable. The wireless communication system includes a terminal 11 and a network-side device 12. The terminal 11 may be a mobile phone, a tablet personal computer (Tablet Personal Computer), a laptop computer (Laptop Computer) also known as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with a wireless communication function, for example, a refrigerator, a television, a washing machine, or furniture), a game console, a personal computer (personal computer, PC), a teller machine or a self-service machine, and other terminal-side devices. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, and the like. It should be noted that the specific type of the terminal 11 is not limited in this embodiment of this application. The network-side device 12 may include an access network device or a core network device, where the access network device 12 may also be known as a radio access network device, a radio access network (Radio Access Network, RAN), a radio access network function, or a radio access network unit. The access network device 12 may include a base station, a wireless local area network (Wireless Local Area Network, WLAN) access point or a WiFi node, and the like. The base station may also be known as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission reception point (Transmission Reception Point, TRP), or another appropriate term in the field, as long as the same technical effects are achieved. The base station is not limited to specific technical vocabulary. It should be noted that in this embodiment of this application, only the base station in the NR system is taken as an example for description, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in this embodiment of this application, only the core network device in the NR system is taken as an example for description, and the specific type of the core network device is not limited.

To facilitate understanding, the following describes some content involved in the embodiments of this application:
1. 4-step random access channel (Random Access Channel, RACH) procedure

### 1.1. Random access procedure

The random access procedure is mainly divided into: contention-free random access and contention-based random access.

The contention-free random access procedure is shown in FIG. 2 and mainly includes three steps.

Message (Message, Msg) 0: A base station allocates to a terminal a dedicated random access resource for contention-free random access. (The resource may be indicated by a physical downlink control channel (Physical Downlink Control Channel, PDCCH) or radio resource control (Radio Resource Control, RRC) information).

Msg1: The terminal sends a specified dedicated random access signal to the base station on a specified random access resource based on a random access resource indicated by Msg0. A network side ensures that the random access resource carrying Msg1 is used by at most one terminal. Therefore, there is no case where multiple terminals send a same preamble (Preamble) on a same time-frequency resource, that is, msg1 collision does not occur. After sending Msg1, the terminal calculates, based on a sending time and frequency position of Msg1, identity information of network-side scheduled Msg2. The identity information includes a random access radio network temporary identity (Random Access Radio Network Temporary Identity, RA-RNTI). After sending Msg1, the terminal monitors a downlink channel within one fixed window (that is, a random access response window (Random Access Response window, RAR window)) to obtain feedback information Msg2 from the network side.

Msg2: The base station sends a random access response to the terminal. The random access response includes: Msg1 identity information (that is, RAPID); uplink timing advance information (that is, Timing Advance Command); uplink transmission grant information (that is, ULGrant); backoff information (that is, Backoff Indicator); and temporary terminal identifier information (that is, Temporary C-RNTI). If the terminal fails to receive the random access response (Random Access Response, RAR), the terminal determines, based on the backoff information indicated in the RAR, a time for a next random access transmission.

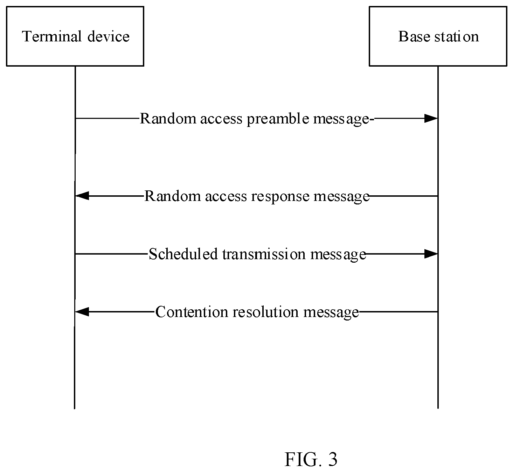

The contention-based random access procedure is shown in FIG. 3 and mainly includes four steps.

Msg1: A terminal selects a random access resource and uses the random access resource to send a selected random access signal to a base station. The calculation method for RA-RNTI and RAR window is the same as that for the contention-free random access procedure. Since the terminal itself selects a sending time-frequency resource and preamble for msg1 from a random access resource set broadcast by the network side, there is a possibility of Msg1 collision.

Msg2: The base station receives Msg1, calculates a timing advance (Timing Advance, TA), and sends a random access response to the terminal. The random access response includes at least the timing advance information, T-C-RNTI, and UL grant for Msg3.

Msg3: The terminal sends uplink transmission on the UL grant specified by Msg2. The content of Msg3 uplink transmission varies with different random access causes. For example, for initial access, Msg3 transmits an RRC connection establishment request. The request is carried by a CCCH.

If the UE is in an RRC connected state at the time of initiating contention-based random access and is not in an RRC (connected) reconstruction procedure, Msg3 does not transmit CCCH-carried signaling, but transmits a connected state identifier C-RNTI of the UE, where the C-RNTI is carried by a C-RNTI MAC CE. After sending Msg3, the terminal starts a contention resolution timer. If Msg4 is not successfully received before the contention resolution timer expires, the UE considers that the Msg4 reception fails.

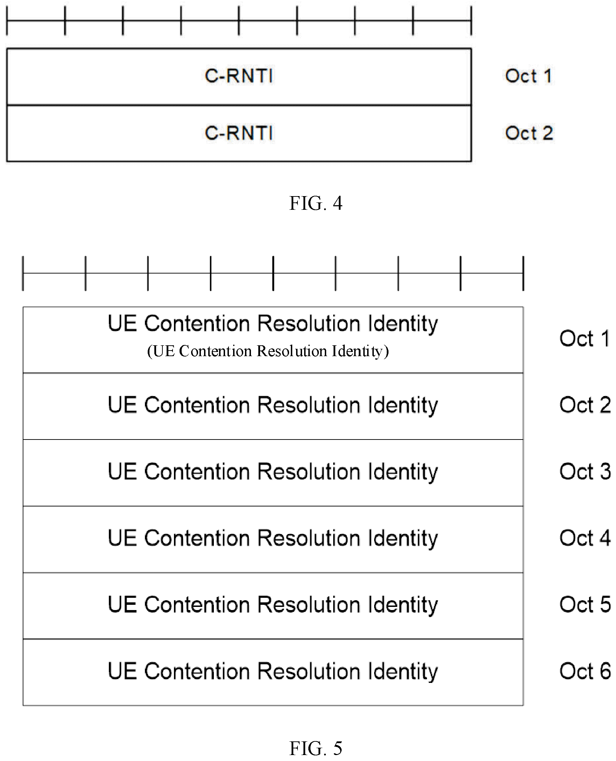

For the C-RNTI MAC CE:
The C-RNTI MAC CE is identified by a MAC subheader with LCID (The C-RNTI MAC CE is identified by MAC subheader with LCID), as shown in FIG. 4. It has a fixed size and consists of a single field defined as follows: C-RNTI: This field contains the C-RNTI of the MAC entity. The length of the field is 16 bits (It has a fixed size and consists of a single field defined as follows: C-RNTI: This field contains the C-RNTI of the MAC entity. The length of the field is 16 bits).

Msg4: is a contention resolution message. Based on Msg4, the terminal can determine whether random access is successful.

The UE performs one of the following actions:
(1) During running of the contention resolution timer, if the UE includes CCCH-carried signaling in Msg3: The UE monitors downlink transmission scheduled by a PDCCH scrambled by T-C-RNTI. If corresponding downlink scheduling is detected, a corresponding PDSCH is decoded:
   A. If the carried information includes UE contention resolution identity (UE Contention Resolution Identity) MAC CE, which carries all or a front part of information (such as the first 48-bit (bit) information) of a UL CCCH service data unit (Service Data Unit, SDU) that the UE sends in Msg3. The UE considers contention resolution successful and stops running of the contention resolution timer.
   B. If the carried information includes UE Contention Resolution Identity MAC CE that is different from all or the front part of information (such as the first 48-bit (bit) information) of the UL CCCH SDU that the UE sends in Msg3, the UE considers contention resolution failed and stops the contention resolution timer. In this case, a possible reason is that msg1 collision occurred (at least two UEs sent a same Msg1/Preamble on the same RACH time-frequency resource); and at least two UEs used a time-frequency resource, scheduled by the network for the UE for sending the Preamble, to transmit Msg3. However, Msg4 carries information of an UL CCCH SDU in a Msg3 sent by another UE, not the information from this UE.
(2) During running of the contention resolution timer, if the UE includes a C-RNTI MAC CE in Msg3, when the UE detects scheduling of a PDCCH scrambled by the C-RNTI carried by the C-RNTI MAC CE, the UE considers contention resolution successful and stops running of the contention resolution timer.
(3) If the contention resolution timer expires, the UE considers contention resolution failed.

As shown in FIG. 5, for the UE Contention Resolution Identity MAC CE:

The UE contention resolution identity MAC CE is identified by a MAC subheader with LCID (The UE Contention Resolution Identity MAC CE is identified by MAC subheader with LCID). It has a fixed 48-bit size and consists of a single field: UE contention resolution Identity: This field contains the UL CCCH SDU. If the UL CCCH SDU is longer than 48 bits, this field contains the first 48 bits of the UL CCCH SDU (It has a fixed 48-bit size and consists of a single field: UE Contention Resolution Identity: This field contains the UL CCCH SDU. If the UL CCCH SDU is longer than 48 bits, this field contains the first 48 bits of the UL CCCH SDU).

### 2. Format of message 3 in the 4-step RACH procedure

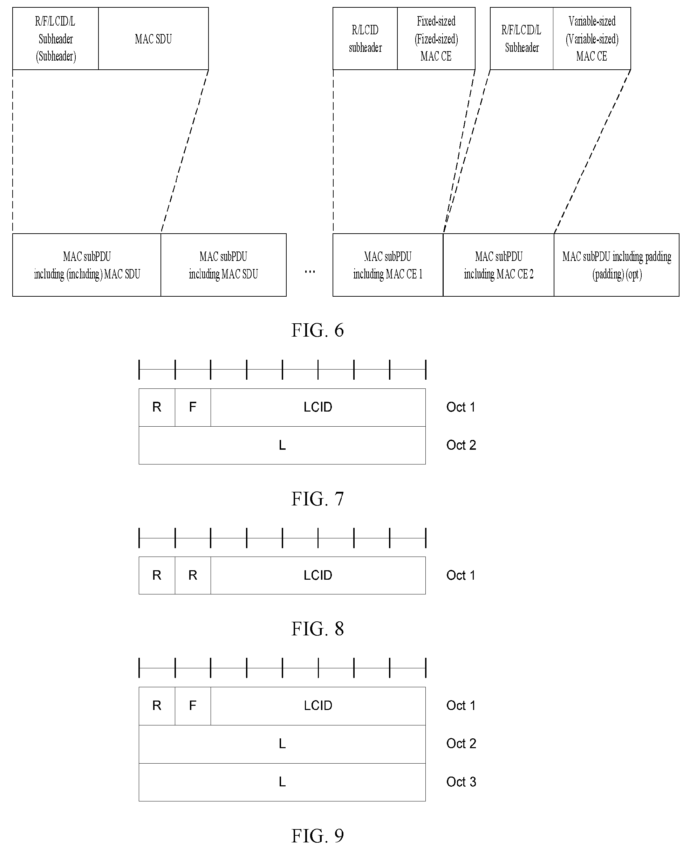

In the 4-step random access procedure, the format of RACH Msg3 is shown in FIG. 6.

Several typical MAC subheader formats are shown in FIG. 7, FIG. 8, and FIG. 9.

Meanings of fields are as follows:
LCID identifies a logical channel to which a MAC SDU corresponding to a subheader belongs or a type of a corresponding MAC CE. Specifically, the logical channel ID field identifies the logical channel instance of the corresponding MAC SDU or the type of the corresponding MAC CE or padding. For DL-SCH and UL-SCH, the information indicated by a same LCID value is defined separately. Each MAC subheader has one LCID field. In NR, the size of the LCID field is 6 bits. If the LCID field is set to 34, one additional octet is present in the MAC subheader containing the eLCID field and follows the octet containing the LCID field. If the LCID field is set to 33, two additional octets are present in the MAC subheader containing the eLCID field and these two additional octets follow the octet containing the LCID field (The Logical Channel ID field identifies the logical channel instance of the corresponding MAC SDU or the type of the corresponding MAC CE or padding for the DL-SCH and UL-SCH respectively. There is one LCID field per MAC subheader. The size of the LCID field is 6 bits. If the LCID field is set to 34, one additional octet is present in the MAC subheader containing the eLCID field and follows the octet containing LCID field. If the LCID field is set to 33, two additional octets are present in the MAC subheader containing the eLCID field and these two additional octets follow the octet containing LCID field).

F: format field, indicating that the length of the L field is 8 bits or 16 bits. Some LCIDs can implicitly identify the lengths of the corresponding MAC SDUs or the lengths of the MAC CEs. For example, the length of the MAC SDU containing UL CCCH is fixed. In this case, the subheader does not contain the F field (as shown in FIG. 8). The "format" field indicates the size of the "length" field. In addition to subheaders corresponding to fixed-sized MAC CEs, padding, and MAC SDUs containing UL CCCH, each MAC subheader has one F field. The size of the F field is 1 bit. The value 0 indicates 8 bits of the length field. The value 1 indicates 16 bits of the length field (The Format field indicates the size of the Length field. There is one F field per MAC subheader except for subheaders corresponding to fixed-sized MAC CEs, padding, and MAC SDUs containing UL CCCH. The size of the F field is 1 bit. The value 0 indicates 8 bits of the Length field. The value 1 indicates 16 bits of the Length field).

L: length field, indicating a length of a MAC SDU or a variable-sized MAC CE. The field can also be described as a field. Specifically, the length field indicates the length of the corresponding MAC SDU or variable-sized MAC CE in bytes. In addition to subheaders corresponding to fixed-sized MAC CEs, padding, and MAC SDUs containing UL CCCH, each MAC subheader has one L field. The size of the L field is indicated by the F field (The Length field indicates the length of the corresponding MAC SDU or variable-sized MAC CE in bytes. There is one L field per MAC subheader except for subheaders corresponding to fixed-sized MAC CEs, padding, and MAC SDUs containing UL CCCH. The size of the L field is indicated by the F field).

R: reserved bit (Reserved bit), which is set to 0 (set to 0).

In the NR system, the meaning of an LCID for an uplink shared channel (Uplink Shared Channel, UL-SCH) in Rel-17 is as shown in Table 1.

**Table 1 Values of LCID for UL-SCH (Values of LCID for UL-SCH)**

| Codepoint (Codepoint)/Index (Index) | Values (values) of LCID |
|---|---|
| 0 | CCCH of size 64 bits (referred to as "CCCH1" in TS 38.331 [5]), except for a RedCap UE (CCCH of size 64 bits (referred to as "CCCH1" in TS 38.331 [5]), except for a RedCap UE) |
| 1-32 | Identity of the logical channel of dedicated control channel (Dedicated Control Channel) DCCH and dedicated traffic channel (Dedicated Traffic Channel, DTCH) (Identity of the logical channel of DCCH and DTCH) |
| 33 | Extended logical channel ID field (two-octet eLCID field) (Extended logical channel ID field (two-octet eLCID field)) |
| 34 | Extended logical channel ID field (one-octet eLCID field) (Extended logical channel ID field (one-octet eLCID field)) |
| 35 | CCCH of size 48 bits for a RedCap UE (referred to as "CCCH" in TS 38.331 [5]) (CCCH of size 48 bits (referred to as "CCCH" in TS 38.331 [5]) for a RedCap UE) |
| 36 | CCCH of size 64 bits (referred to as "CCCH1" in TS 38.331 [5]) for a RedCap UE (CCCH of size 64 bits (referred to as "CCCH1" in TS 38.331 [5]) for a RedCap UE) |
| 37-42 | Reserved (Reserved) |
| 43 | Truncated enhanced beam failure recovery (Beam Failure Recovery, BFR) (one octet Ci) (Truncated Enhanced BFR (one octet Ci)) |
| 44 | Timing advance report (Timing Advance Report) |
| 45 | Truncated sidelink BSR (Truncated Sidelink BSR) |
| 46 | Sidelink BSR (Sidelink BSR) |
| 47 | Reserved (Reserved) |
| 48 | Listen before talk (Listen Before Talk, LBT) failure (four octets) (LBT failure (four octets)) |
| 49 | LBT failure (one octet) (LBT failure (one octet)) |
| 50 | BFR (one octet Ci) (BFR (one octet Ci)) |
| 51 | Truncated BFR (one octet Ci) (Truncated BFR (one octet Ci)) |
| 52 | CCCH of size 48 bits (referred to as "CCCH" in TS 38.331 [5]), except for a RedCap UE (CCCH of size 48 bits (referred to as "CCCH" in TS 38.331 [5]), except for a RedCap UE) |
| 53 | Recommended bit rate query (Recommended bit rate query) |
| 54 | Multiple entry power headroom report (Power Headroom Report, PHR) (four octets Ci) (Multiple Entry PHR (four octets Ci)) |
| 55 | Configured grant confirmation (Configured Grant Confirmation) |
| 56 | Multiple entry PHR (one octet Ci) (Multiple Entry PHR (one octet Ci)) |
| 57 | Single entry PHR (Single Entry PHR) |
| 58 | C-RNTI |
| 59 | Short truncated buffer status report (Buffer Status Report, BSR) (Short Truncated BSR) |
| 60 | Long truncated BSR (Long Truncated BSR) |
| 61 | Short (Short) BSR |
| 62 | Long (Long) BSR |
| 63 | Padding (Padding) |

The LCIDs 0, 35, 36, and 52 correspond to CCCHs separately used for 48bit/56bit uplink (Uplink, UL) CCCH MAC SDUs for both reduced-capability user equipment (reduced-capability user equipment, RedCap) UE and non-RedCap UE.

The LCID 58 corresponds to the C-RNTI MAC CE.

The above 5 LCIDs all use the subheader format shown in FIG. 8.

### 3. 2-step RACH (2-Step RACH) procedure

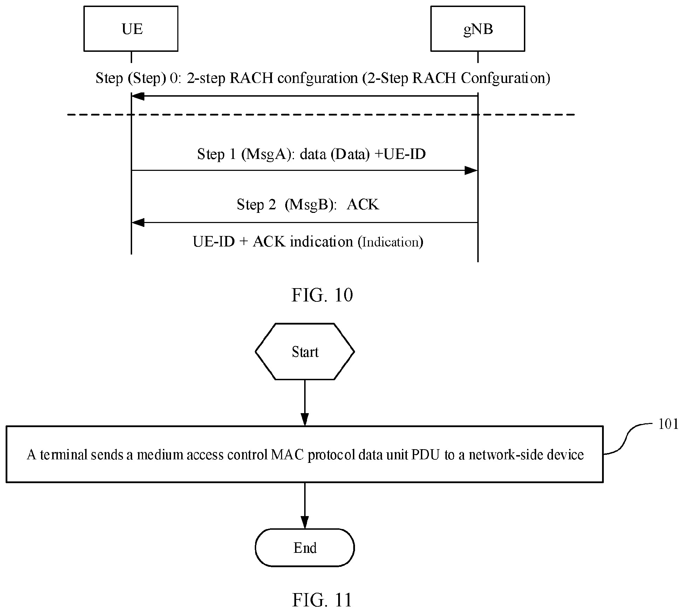

As shown in FIG. 10, the 2-Step RACH procedure includes the following steps.

Step 0: A network side configures two-step random access configuration information for UE. For example, the configuration information includes transmission resource information corresponding to MsgA and MsgB.

Step 1: The UE triggers the 2-step RACH procedure. It sends request information (MsgA) to the network side, for example, sending MsgA via PUSCH and preamble.

Step 2: The network side sends acknowledgment information (MsgB) to the UE. If the UE fails to receive MsgB (failure means that the UE fails to receive the RAPID or contention resolution ID corresponding to the MSGA sent by the UE itself), the UE resends Msg1 (or may resend MSGA, MSG3, or MSG1, depending on the specific scheme).

Under normal circumstances, for ease of understanding, the MSGA in the 2-step procedure includes information corresponding to MSG1 (preamble) and MSG3 (PUSCH) in the 4-step procedure. That is, the UE transmits CCCH or C-RNTI MAC CE in the MsgA PUSCH part.

### 4. Channel quality information

In order to assist the network side in downlink scheduling, the terminal can report downlink channel information/measurement results to the network side, such as channel quality indicator (Channel quality indicator, CQI) or channel state information (Channel State Information, CSI). The network side can perform downlink scheduling more effectively based on the measurement results.

### 5. Physical uplink shared channel (Physical Uplink Shared Channel, PUSCH) retransmission

After random access ends, the network side may schedule the terminal to perform subsequent uplink transmission. For example, the next PUSCH transmission after 4-step RACH Msg4 or 2-step RACH MsgB can be described as Msg5 or MsgC. If the terminal is located at the cell edge, the network side can schedule the terminal to transmit Msg5 or MsgC in a repetition (repetition) manner, that is, scheduling the terminal to repeatedly send Msg5 or MsgC multiple times (instead of a manner where after the conventional network side schedules the terminal to send Msg5 or MsgC once, if the network side confirms reception failure, the network side schedules the UE to retransmit Msg5 or MsgC). This can improve the probability of successful reception of Msg5 or MsgC by the network side and reduce the delay for successful reception of Msg5 or MsgC.

### 6. RRC message processing delay

The network side may include an RRC configuration message carried by Msg4 or MsgB for random access, such as an RRC setup (RRCSetup) message, an RRC resume (RRCResume) message, or an RRC reestablishment (RRCReestablishment) message. The current protocol specifies maximum processing times for these RRC configuration messages. A start point of the processing time is when the terminal finishes receiving the corresponding RRC configuration message from the network side. An end point of the processing time is when the terminal is ready to receive uplink scheduling information from the network side. The scheduling information is used for scheduling an uplink transmission resource for carrying a response message to the RRC configuration message (such as an RRC setup complete (RRCSetupComplete) message).

The performance requirement of the processing time is expressed as the duration in [ms] from end of reception of the "network->UE message" on a physical layer of the UE to a time when the UE is ready for the reception of the uplink grant for the "UE->network response message", with no access delay other than the TTI alignment (for example, excluding delays caused by scheduling, the random access procedure, or physical layer synchronization) (The performance requirement is expressed as the time in [ms] from the end of reception of the network -> UE message on the UE physical layer up to when the UE shall be ready for the reception of uplink grant for the UE -> network response message with no access delay other than the TTI-alignment (for example, excluding delays caused by scheduling, the random access procedure or physical layer synchronization)).

Because the network side does not yet know the processing capability of the terminal during the random access procedure, a length of a processing time needs to be set according to a processing capability of a lowest-processing-capability terminal allowed to access in the network side, ensuring that terminals meeting the processing time requirements can access the network. When performing resource scheduling, the network side needs to consider the above processing time for scheduling. Therefore, for a terminal with a high processing capability, the above processing time is set to too loose (too long), causing the terminal to send a response message to the RRC configuration message relatively late, delaying subsequent scheduling for the terminal by the network side, prolonging the RRC connection establishment/resume/reestablishment procedure, and degrading the user experience.

### 7. PUCCH repetition for Msg4 HARQ-ACK (PUCCH repetition for Msg4 HARQ-ACK)

In the related-art RACH procedure, HARQ transmission is used for Msg4. Considering that collisions are possible in the RACH procedure, that is, multiple terminals send a same preamble on one RACH occasion (RACH Occasion, RO) resource. These multiple terminals may all send Msg3 based on the UL grant for scheduling in the received msg2 and send their own identity information in Msg3. Typically, the network side can decode Msg3 sent by at most one terminal and include the terminal identity in the decoded Msg3 in Msg4. If a terminal finds that Msg4 carries the identity included in the Msg3 sent by the terminal, the terminal determines that random access is successful and sends a hybrid automatic repeat request (Hybrid automatic repeat request, HARQ) acknowledgement (Acknowledgement, ACK) to confirm successful reception of Msg4. If a terminal finds that the identity included in Msg4 is different from the identity of the Msg3 sent by the terminal, the terminal determines that the random access fails. The terminal with failed random access does not send a HARQ ACK, and the terminal with failed random access also does not send a HARQ negative acknowledgement (Negative Acknowledgement, NACK), because Msg4 is not sent to the terminal. If a terminal does not decode Msg4, the terminal also does not send a HARQ NACK, because it is not determined whether Msg4 is sent to the terminal. If the network side does not receive a HARQ ACK for Msg4, the network side can schedule a HARQ retransmission of Msg4 to improve the probability of correct reception of Msg4 by the terminal.

In the satellite scenario, a distance between the terminal and the satellite is quite long, resulting in high path loss. Therefore, in many cases, a single HARQ ACK for Msg4 sent by the terminal may not be correctly received or decoded by the network side. Therefore, the terminal can indicate related information of PUCCH repetition for Msg4 HARQ-ACK to the network side in Msg3, to indicate that the terminal has the capability for repeated HARQ ACK transmission for Msg4, or that a channel condition of the terminal requires HARQ-ACK transmission for Msg4, or that the terminal requests or needs to repeatedly transmit HARQ ACK for Msg4. In this way, after receiving Msg3, the network side, when scheduling and/or sending Msg4, allocates PUCCH resources for the terminal to repeatedly transmit HARQ ACK for Msg4, or indicates the terminal to perform PUCCH repetition for Msg4 HARQ-ACK.

### 8. Multi-USIM (Multi-USIM, MUSIM) terminal device restrictions

For a multi-card terminal device, some implementation methods allow multiple cards to share hardware resources of a terminal. The following uses a dual-card terminal device as an example for description. In terms of protocol, the dual-card terminal device is modeled as two UEs sharing part of the capabilities. If UE corresponding to card 1 is already in an RRC connected state, when UE corresponding to card 2 needs to enter a connected state (including establishing an RRC connection from an RRC idle state to enter an RRC connected state, and/or resuming an RRC connection from an RRC inactive (inactive) state to enter the RRC connected state), the UE corresponding to card 2 needs to notify the network side that this UE is in a capability-restricted state due to MUSIM. The network side corresponding to card 2 does not know the UE capabilities applied or occupied by the network side corresponding to card 1, and only knows the capabilities reported by the UE corresponding to card 2. The reported capabilities may be greater than the capabilities that the UE corresponding to card 2 can apply or occupy or use in this case, because the UE corresponding to card 1 is already using part of the capabilities. Therefore, when configuring the UE corresponding to card 2, the network side corresponding to card 2 may avoid the using of all the capabilities reported by the UE corresponding to card 2 to prevent exceeding the capabilities currently available to the UE corresponding to card 2.

It should be noted that the multi-card terminal device or the dual-card terminal device is equivalent to a device equipped with multiple UEs or two UEs. If only the terminal is mentioned, it refers to a single UE.

An information sending method and apparatus, an information receiving method and apparatus, a terminal, and a network-side device according to embodiments of this application are described in detail below using some embodiments and application scenarios thereof in conjunction with the accompanying drawings.

Referring to FIG. 11, FIG. 11 is a flowchart of an information sending method according to an embodiment of this application. As shown in FIG. 11, the information sending method includes the following step.

Step 101: A terminal sends a medium access control MAC protocol data unit PDU to a network-side device, the MAC PDU including a target MAC subPDU.

First indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

The MAC PDU sent by the terminal to the network-side device may be a MAC PDU corresponding to or carried by Msg3 in a random access procedure, or a MAC PDU corresponding to or carried by MsgA PUSCH in the random access procedure.

In addition, the MAC subPDU corresponding to the CCCH may mean that the MAC subheader of the MAC subPDU is used for describing the CCCH, or a payload (payload) part corresponding to the MAC subheader of the MAC subPDU includes CCCH-carried data or signaling.

In an implementation, the MAC subPDU corresponding to the CCCH includes a CCCH MAC SDU.

In an implementation, the first indication information may be a bit at a specific position in the MAC subheader of the target MAC subPDU.

It should be noted that a reserved bit of the R17 MAC protocol may be used as the first indication information, such as one of "R" bits in FIG. 8.

Exemplarily, the first indication information may be the 1st bit or the most significant bit (most significant bit) of the MAC subheader of the target MAC subPDU.

In an implementation, the type of the target MAC subPDU can be indicated only through the first indication information.

It should be noted that when the network-side device has received the MAC PDU sent by the terminal, the network-side device can determine, based on the first indication information in the MAC PDU, that a MAC subPDU where the first indication information is located is the target MAC subPDU (the MAC subPDU corresponding to the CCCH or the MAC subPDU containing the C-RNTI MAC CE), and determine the type of the target MAC subPDU based on the first indication information.

In an implementation, the type of the target MAC subPDU can be indicated jointly through the first indication information and ordering information. The ordering information is used for indicating an order of the MAC subheader of the target MAC subPDU among all MAC subPDUs in the MAC PDU.

It should be noted that when the network-side device has received the MAC PDU sent by the terminal, the network-side device can determine, based on ordering information of the MAC subPDU in the MAC PDU, the target MAC subPDU (the MAC subPDU corresponding to the CCCH or the MAC subPDU containing the C-RNTI MAC CE), and determine the type of the target MAC subPDU based on the first indication information.

In an implementation, when the first indication information takes a first value, it indicates that the target MAC subPDU is the MAC subPDU corresponding to the CCCH. When the first indication information takes a second value, it indicates that the target MAC subPDU is the MAC subPDU containing the C-RNTI MAC CE.

In an implementation, in an example where the type of the target MAC subPDU is indicated only through the first indication information, the first indication information can be used for indicating a first-type MAC subPDU, where the first-type MAC subPDU is the MAC subPDU corresponding to the CCCH, and a MAC subheader of the first-type MAC subPDU includes no logical channel identity LCID. Exemplarily, when the first indication information takes a first value, it indicates that the target MAC subPDU is the first-type MAC subPDU. When the first indication information takes a second value, it indicates that the target MAC subPDU is not the first-type MAC subPDU, that is, the target MAC subPDU is another type of MAC subPDU other than the first type. Optionally, when the first indication information takes the second value, the type of the target MAC subPDU can be further indicated by an LCID field in the MAC subheader of the target MAC subPDU.

In an implementation, in an example where the type of the target MAC subPDU is indicated jointly through the first indication information and ordering information, the first indication information and the ordering information can be used for jointly indicating a first-type MAC subPDU, where the first-type MAC subPDU is the MAC subPDU corresponding to the CCCH, and a MAC subheader of the first-type MAC subPDU includes no LCID. Exemplarily, in a case that the MAC subheader of the target MAC subPDU is a MAC subheader at a specific position in the MAC PDU (such as the 1st MAC subheader), when the first indication information takes a first value, it indicates that the target MAC subPDU is the first-type MAC subPDU. When the first indication information takes a second value, it indicates that the target MAC subPDU is not the first-type MAC subPDU, that is, the target MAC subPDU is another type of MAC subPDU other than the first type. Optionally, when the first indication information takes the second value, the type of the target MAC subPDU can be further indicated by an LCID field in the MAC subheader of the target MAC subPDU.

It should be noted that in the related art, the MAC subPDUs corresponding to the CCCH all include LCIDs. Since the MAC subheader of the first-type MAC subPDU includes no LCID, the first-type MAC subPDU is a newly added type of MAC subPDU. Through this newly added type of MAC subPDU corresponding to the CCCH, the extension of the MAC subPDU corresponding to the CCCH can be achieved.

It should be noted that only terminals in an RRC idle (idle) state and an inactive (inactive) state need to send a MAC subPDU corresponding to a CCCH on RACH Msg3 or MSGA PUSCH. For a terminal in an RRC idle state, a current serving cell does not have the context (context) of the terminal. For a terminal in an RRC inactive state, a current serving cell may not have the context of the terminal, and terminal context acquisition may fail. Therefore, when the network side sends Msg4 to the terminal, the context of the terminal may not be obtained, that is, having no capability and type information of the terminal. Therefore, the terminal can indicate, while sending the MAC subPDU corresponding to the CCCH to the network side, related information such as the capability or type of the terminal, Msg4/MsgB reception requirement, Msg4/MsgB feedback transmission requirement, or Msg5/MsgC transmission requirement, so that the network side adopts corresponding scheduling and transmission strategies according to the terminal capability or type or transmission requirement in Msg4/MsgB and subsequent transmissions. For example, the scheduled transmission bandwidth does not exceed the reception or transmission capability of the terminal. In an embodiment of this application, the MAC PDU sent by the terminal to the network-side device may be Msg3 or MSGA PUSCH in the random access procedure, thereby supporting inclusion of related information such as the capability or type of the terminal, Msg4/MsgB reception requirement, Msg4/MsgB feedback transmission requirement, or Msg5/MsgC transmission requirement in this newly added type of MAC subPDU corresponding to the CCCH, where "/" means or.

In the related art, initial RRC messages sent by terminals in an idle state and an inactive state to the network side are carried by uplink CCCH. Subsequent uplink RRC messages and user plane data are carried by channels other than the CCCH. At a MAC layer, upper-layer data and signaling are mapped to multiple transmission channels and sent to the MAC layer. Upper-layer data or signaling or MAC CE can be multiplexed (such as cascaded) in one MAC PDU and sent to the network side. The MAC PDU is a data block sent by the MAC layer to a lower layer. The network side needs to separate the data and signaling sent by the terminal according to the channel. To perform separation, the MAC PDU indicates the number of a logical channel to which the upper-layer data or signaling belongs. CCCH transmission channels and logical channels are in one-to-one correspondence. In the related art, the NR protocol allocates multiple corresponding logical channel identities (LCID) to the transmission channel CCCH to indicate length information, other dedicated information, and CCCH channels, causing high consumption and waste of LCIDs. An embodiment of this application proposes a newly added type of MAC subPDU corresponding to a CCCH, which can reduce the consumption of LCIDs.

It should be noted that the size of MSG3 for CBRA is limited. Depending on different UE RRC states, MSG3 may include a MAC subPDU corresponding to the CCCH or a MAC subPDU containing the C-RNTI MAC CE. The MAC subPDU corresponding to the CCCH or the MAC subPDU containing the C-RNTI MAC CE is carried only in MSG3 and MSGA PUSCH. In the related art, the MAC subPDU corresponding to the CCCH or the MAC subPDU containing the C-RNTI MAC CE is distinguished through the LCID in the MAC subheader. In addition, a large number of LCIDs are also used for indicating the length of the CCCH, the type of the UE, and the like, resulting in the need to reserve multiple LCIDs for the CCCH, and leading to high consumption of LCID resources.

In the related art, the CCCH occupies 4 LCIDs; subsequently, new features may be introduced, requiring indication using the LCIDs of the CCCH to indicate. For example, some NTN UEs need to send an indication to the network in Msg3: a special mechanism is applied during Msg4 HARQ transmission. Thus, multiple LCIDs need to be applied. For example:
LCID=A: corresponds to CCCH of size 64 bits except for a RedCap UE for Msg4 HARQ special mechanism (CCCH of size 64 bits except for a RedCap UE for Msg4 HARQ special mechanism).
LCID=B: corresponds to CCCH of size 48 bits except for a RedCap UE for Msg4 HARQ special mechanism (CCCH of size 48 bits except for a RedCap UE for Msg4 HARQ special mechanism).
LCID=C: corresponds to CCCH of size 64 bits for a RedCap UE for Msg4 HARQ special mechanism (CCCH of size 64 bits for a RedCap UE for Msg4 HARQ special mechanism).
LCID=D: corresponds to CCCH of size 64 bits for a RedCap UE for Msg4 HARQ special mechanism (CCCH of size 64 bits for a RedCap UE for Msg4 HARQ special mechanism).

Therefore, using LCIDs to indicate information to the network side consumes a large number of LCIDs. Currently, there are fewer than 10 remaining undefined 6-bit length LCIDs in NR, and the signaling size carried by CCCH is limited, preventing the extension to indicate more information. The embodiments of this application propose a newly added type of MAC subPDU corresponding to CCCH, which can reduce consumption of LCIDs.

In this embodiment of this application, a MAC subheader of the first-type MAC subPDU in a preset format is defined. The MAC subheader in the preset format is a newly added MAC subheader, and the MAC subheader in the preset format is used for CCCH or C-RNTI MAC CE transmission. In an implementation, the MAC subheader in the preset format can satisfy the following conditions: the MAC subheader is located at a specific position in the MAC PDU, such as the 1st subheader; the length of the MAC subheader is 1 byte (byte); one field is used for indicating whether the MAC subheader in the preset format corresponds to the MAC subPDU corresponding to the CCCH or the MAC subPDU containing the C-RNTI MAC CE; all or part of the remaining fields in the MAC subheader in the preset format are used for indicating the size of the UL CCCH SDU, the type of the UE, transmission characteristics, and the like; and the MAC subheader in the preset format includes no LCID field.

It should be noted that one MAC PDU includes at most one of the following: no more than one MAC SDU for a CCCH and no more than one C-RNTI MAC CE. In addition, one MAC PDU does not include both MAC SDU for the CCCH and the C-RNTI MAC CE. The MAC SDU corresponding to the CCCH (the MAC SDU for the CCCH) is a MAC SDU in the MAC subPDU corresponding to the CCCH.

In this embodiment of this application, the terminal sends the medium access control MAC protocol data unit PDU to the network-side device, the MAC PDU including the target MAC subPDU; where the first indication information in the MAC subheader of the target MAC subPDU is used for indicating the type of the target MAC subPDU; the first indication information is the indication information occupying 1 bit; and the type of the target MAC subPDU includes at least one of the following: the MAC subPDU corresponding to the common control channel CCCH; and the MAC subPDU containing the cell radio network temporary identifier C-RNTI MAC control element CE. In this way, the type of the MAC subPDU is indicated by the first indication information occupying 1 bit, supporting indication of the MAC subPDU corresponding to the CCCH or the MAC subPDU containing the C-RNTI MAC CE through the first indication information occupying 1 bit, with no need to indicate the MAC subPDU corresponding to the CCCH or the MAC subPDU containing the C-RNTI MAC CE through an LCID, thereby reducing the consumption of LCID resources.

Optionally, the first indication information and ordering information are used for jointly indicating the type of the target MAC subPDU, and the ordering information is used for indicating an order of the MAC subheader of the target MAC subPDU in the MAC PDU.

In a case that the MAC subheader of the target MAC subPDU is a MAC subheader at a preset position in the MAC PDU, the first indication information is used for indicating the type of the target MAC subPDU.

It should be noted that the preset position may be a specific position. Exemplarily, in a case that the MAC subheader of the target MAC subPDU is the 1st MAC subheader in the MAC PDU, the first indication information is used for indicating the type of the target MAC subPDU.

In this implementation, the first indication information and the ordering information are used for jointly indicating the type of the target MAC subPDU, and the ordering information is used for indicating the order of the MAC subheader of the target MAC subPDU in the MAC PDU. In this way, a MAC subPDU at a specific position in the MAC PDU is used as the MAC subPDU corresponding to the CCCH or the MAC subPDU containing the C-RNTI MAC CE, and a type of the MAC subPDU at the specific position is further indicated through the first indication information, the remaining MAC subPDUs other than the MAC subPDU at the specific position in the MAC PDU can be used for other purposes in a field where the first indication information is located, thereby enabling the MAC PDU to carry more potential information, and helping to improve the communication efficiency between the terminal and the network side.

Optionally, the MAC subPDU corresponding to the CCCH includes at least one of the following:
a first-type MAC subPDU, where the first-type MAC subPDU is the MAC subPDU corresponding to the CCCH, and a MAC subheader of the first-type MAC subPDU includes no logical channel identity LCID; and
a second-type MAC subPDU, where the second-type MAC subPDU is the MAC subPDU corresponding to the CCCH, and the MAC subheader of the second-type MAC subPDU includes an LCID; and
the MAC subPDU containing the C-RNTI MAC CE includes at least one of the following:
   a third-type MAC subPDU, where the third-type MAC subPDU is the MAC subPDU containing the C-RNTI MAC CE, and the MAC subheader of the third-type MAC subPDU includes no LCID; and
   a fourth-type MAC subPDU, where the fourth-type MAC subPDU is the MAC subPDU containing the C-RNTI MAC CE, and the MAC subheader of the fourth-type MAC subPDU includes an LCID.

In this implementation, the size of the MAC subheader of the first-type MAC subPDU may be 1 byte. The first indication information in the first-type MAC subPDU is a first value. Exemplarily, the first value is 1. All or part of the remaining bits in the first-type MAC subPDU except the first indication information can be used for indicating terminal-related information. The first-type MAC subPDU is a newly added type of MAC subPDU corresponding to the CCCH.

In this implementation, the first indication information in the second-type MAC subPDU is a second value. Exemplarily, the second value is 0. The second-type MAC subPDU may be a MAC subPDU corresponding to the CCCH in the format of the related art.

In this implementation, the size of the MAC subheader of the third-type MAC subPDU may be 1 byte. The first indication information in the third-type MAC subPDU is a second value. Exemplarily, the second value is 0. The third-type MAC subPDU is a newly added type of MAC subPDU containing the C-RNTI MAC CE.

In this implementation, the first indication information in the fourth-type MAC subPDU is a second value. Exemplarily, the second value is 0. The fourth-type MAC subPDU may be a MAC subPDU containing the C-RNTI MAC CE in the format of the related art.

Optionally, in a case that the first indication information is a first preset value, the first indication information indicates that the target MAC subPDU is the first-type MAC subPDU.

The first preset value may be 1.

In an implementation, if the first indication information is the first preset value, the target MAC subPDU is the first-type MAC subPDU. When the first indication information is a value other than the first preset value, the target MAC subPDU is another type of MAC subPDU other than the first-type MAC subPDU. Exemplarily, if the first indication information is a second preset value, the target MAC subPDU is the second-type MAC subPDU or the fourth-type MAC subPDU; or if the first indication information is the second preset value, the target MAC subPDU is the third-type MAC subPDU.

In this implementation, in a case that the first indication information is the first preset value, the first indication information indicates that the target MAC subPDU is the first-type MAC subPDU, so that the first-type MAC subPDU that includes no LCID can be indicated through the first indication information. The first-type MAC subPDU is a newly added type of MAC subPDU corresponding to the CCCH, so that the newly added type of MAC subPDU corresponding to the CCCH can be indicated through the first indication information, and the extension of the MAC subPDU corresponding to the CCCH can be achieved without consuming LCID resources.

Optionally, in a case that the first indication information is the second preset value, the first indication information indicates that the target MAC subPDU includes an LCID, and the LCID is used for indicating that the target MAC subPDU is the second-type MAC subPDU or the fourth-type MAC subPDU.

The second preset value may be 0.

In addition, the first indication information being the second preset value can indicate that the target MAC subPDU is not the first-type MAC subPDU, and the target MAC subPDU is the second-type MAC subPDU or the fourth-type MAC subPDU. Further, the target MAC subPDU can be indicated as the second-type MAC subPDU or the fourth-type MAC subPDU through the LCID in the target MAC subPDU.

In addition, in a case that the first indication information is the second preset value, the target MAC subPDU includes an LCID, and the LCID can be used for indicating that the target MAC subPDU is the second-type MAC subPDU or the fourth-type MAC subPDU. It should be noted that the LCID can also indicate MAC subPDUs of other types except the target MAC subPDU.

In this implementation, in a case that the first indication information is the second preset value, the first indication information indicates that the target MAC subPDU includes an LCID, and the LCID is used for indicating that the target MAC subPDU is the second-type MAC subPDU or the fourth-type MAC subPDU, so that the first indication information and the LCID jointly indicate the type of the MAC subPDU corresponding to the CCCH or the MAC subPDU containing the C-RNTI MAC CE as defined in the related art, enabling reuse of the MAC subheaders for such MAC subPDUs from the related art and enhancing usability.

Optionally, in a case that the first indication information is the second preset value, the first indication information indicates that the target MAC subPDU is the third-type MAC subPDU.

The first indication information being the second preset value can indicate that the target MAC subPDU is not the first-type MAC subPDU, and the target MAC subPDU is the third-type MAC subPDU.

In this implementation, in a case that the first indication information is the second preset value, the first indication information indicates that the target MAC subPDU is the third-type MAC subPDU, so that the third-type MAC subPDU that includes no LCID can be indicated through the first indication information. The third-type MAC subPDU is a newly added type of MAC subPDU containing the C-RNTI MAC CE, so that the newly added type of MAC subPDU containing the C-RNTI MAC CE can be indicated through the first indication information, and the MAC subPDU containing the C-RNTI MAC CE can be indicated without consuming LCIDs.

Optionally, a size of the MAC subheader of the first-type MAC subPDU is 1 byte; or
a size of the MAC subheader of the third-type MAC subPDU is 1 byte.

Optionally, before the terminal sends the MAC PDU to the network-side device, the method further includes the following steps:
receiving, by the terminal, a first message sent by the network-side device, where the first message includes at least one piece of second indication information, and the second indication information indicates terminal-related information that the network-side device allows to be reported or terminal-related information that the network-side device does not allow to be reported; and
determining, by the terminal based on the second indication information, any one of the following:
   the terminal is allowed to report the terminal-related information corresponding to the second indication information; or
   the terminal is not allowed to report the terminal-related information corresponding to the second indication information.

The terminal-related information may include feature information. The feature information includes at least one of the following: a type of the terminal; a terminal-expected feedback manner of a random access message; channel quality information of the terminal; PUSCH retransmission request information of the terminal; PUSCH retransmission capability information of the terminal; and configuration restriction status information of the terminal.

In an implementation, the first message may include one piece of second indication information. The second indication information includes multiple pieces of sub-indication information. Each piece of sub-indication information corresponds to one piece of feature information. Exemplarily, the second indication information may be "010". The 1st bit can indicate the type of the terminal, the 2nd bit can indicate the PUSCH retransmission request information of the terminal, and the 3rd bit can indicate the configuration restriction status information of the terminal.

In an implementation, the first message may include multiple pieces of second indication information. Each piece of second indication information corresponds to one piece of feature information. Exemplarily, the multiple pieces of second indication information may be "010" (that is, three bits each correspond to one piece of feature information). The 1st second indication information can indicate the type of the terminal, the 2nd second indication information can indicate the PUSCH retransmission request information of the terminal, and the 3rd second indication information can indicate the configuration restriction status information of the terminal. The multiple pieces of second indication information can be indicated through one IE of the first message or different IEs of the first message.

In addition, the first message may be a broadcast message.

It should be noted that the terminal receiving the first message sent by the network-side device may include the terminal receiving the first message sent by the cell. For different cells, the second indication information carried by the first message may be different, so that different cells can notify a terminal of feature information that the cell allows to be reported through the second indication information. Exemplarily, cell 1 can notify the terminal through the first message. The feature information that the cell allows to be reported includes: feature information 1, feature information 2, and feature information 3. Cell 2 can notify the terminal through the first message. The feature information that the cell allows to be reported includes: feature information 1 and feature information 4.

In this implementation, the terminal receives the first message sent by the network-side device. The terminal determines, based on the second indication information included in the first message, any one of the following: the terminal is allowed to report the terminal-related information corresponding to the second indication information; or the terminal is not allowed to report the terminal-related information corresponding to the second indication information. In this way, the terminal can report the feature information that the network side allows the terminal to report, avoiding reporting feature information that the network side does not allow the terminal to be reported, enabling the MAC PDU to carry more potential information, and helping to improve the communication efficiency between the terminal and the network side.

Optionally, in a case that the target MAC subPDU is the first-type MAC subPDU or the third-type MAC subPDU, the target MAC subPDU includes at least one piece of third indication information, the third indication information is used for indicating at least one piece of terminal-related information; where
the first indication information and the third indication information are located at different positions in the MAC subheader of the target MAC subPDU.

The first indication information and the third indication information being located at different positions in the MAC subheader of the target MAC subPDU can be understood as the third indication information and the first indication information using different information fields/bits to indicate in the MAC subheader of the target MAC subPDU.

In an implementation, the target MAC subPDU may include one piece of third indication information, and the third indication information can be used for indicating a combination of feature information.

In an implementation, the target MAC subPDU may include multiple pieces of third indication information, and each piece of third indication information corresponds to one piece of feature information.

In this implementation, the target MAC subPDU includes at least one piece of third indication information. The third indication information is used for indicating at least one piece of terminal-related information, thereby supporting the terminal in reporting the feature information of the terminal through the MAC subPDU corresponding to the CCCH and including no LCID, or supporting the terminal in reporting the feature information of the terminal through the MAC subPDU containing the C-RNTI MAC CE and including no LCID, and achieving extension of the MAC subPDU corresponding to the CCCH or the MAC subPDU containing the C-RNTI MAC CE without additionally consuming LCID resources.

Optionally, the target MAC subPDU includes multiple pieces of third indication information, and the third indication information at different positions in the MAC subheader is used for indicating different terminal-related information; or
the target MAC subPDU includes one piece of third indication information, and the third indication information with different values is used for indicating terminal-related information of different combinations.

In an implementation, the target MAC subPDU includes one piece of third indication information, and the third indication information can be used for indicating a combination of terminal-related information. Exemplarily, when the third indication information takes a third value, it indicates that a size of the uplink UL CCCH SDU sent by the terminal is 48 bits, and the type of the UE is an eRedCap UE. When the third indication information takes a fourth value, it indicates that the size of the uplink UL CCCH SDU sent by the terminal is 64 bits, and the type of the UE is a non-eRedCap UE, or the like.

In an implementation, the target MAC subPDU may include multiple pieces of third indication information, and each piece of third indication information may correspond to one piece of terminal-related information. Exemplarily, the 1st third indication information of the multiple pieces of third indication information can indicate the type of the terminal, the 2nd third indication information can indicate the configuration restriction status information of the terminal, and the 3rd third indication information can indicate the size of the uplink UL CCCH SDU sent by the terminal, and the like.

It should be noted that this embodiment of this application does not specify the specific naming of the field where the third indication information for indicating terminal-related information of different combinations is located. For example, the third indication information can reuse the name or length of the LCID field. The field where the third indication information is located should be regarded as a field different from the LCID field in the related art, because its meaning is different from the meaning of the LCID field in the related art.

Optionally, after the terminal receives the second indication information sent by the network-side device, the method further includes the following step:
determining, by the terminal based on the second indication information, the third indication information in the target MAC subPDU.

Information indicated by the third indication information in the target MAC subPDU may be the terminal-related information that the terminal is allowed to report, which is determined based on the second indication information. The terminal-related information may be feature information, so that the information indicated by the third indication information may be the feature information allowed to be reported by the terminal, which is determined based on the second indication information.

In an implementation, the feature information reported by the third indication information may include the feature information allowed to be reported by the terminal, which is indicated by the second indication information.

Exemplarily, the second indication information indicates that the terminal is allowed to report feature 2 and feature 5, and the third indication information may be feature information of feature 2 and feature 5.

In this implementation, the terminal determines the third indication information in the target MAC subPDU based on the second indication information, so that the terminal can report, according to the indication of the network-side device, the feature information that the network side allows the terminal to report, avoiding reporting of the feature information that the network side does not allow the terminal to report, enabling the MAC PDU to carry more potential information, and helping to improve the communication efficiency between the terminal and the network side.

Optionally, in a case that the target MAC subPDU includes multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

In an implementation, the order of the multiple pieces of third indication information in the target MAC subPDU can be determined based on the order relationship specified by the protocol.

Exemplarily, information indicated by the multiple pieces of third indication information may be feature information of feature 2, feature 5, and feature 6. In the order relationship specified by the protocol, an order relationship of feature 2, feature 5, and feature 6 is as follows: feature 5, feature 6, and feature 2. Thus, the order of the multiple pieces of third indication information in the target MAC subPDU is as follows: feature information of feature 5, feature information of feature 6, and feature information of feature 2.

In an implementation, the order of the multiple pieces of third indication information in the target MAC subPDU can be determined based on the order relationship of the second indication information corresponding to the multiple pieces of third indication information in the first message.

Exemplarily, information indicated by the multiple pieces of third indication information may be feature information of feature 2, feature 5, and feature 6. In the first message, an order relationship of feature 2, feature 5, and feature 6 corresponding to the second indication is as follows: feature 5, feature 6, and feature 2. Thus, the order of the multiple pieces of third indication information in the target MAC subPDU is as follows: feature information of feature 5, feature information of feature 6, and feature information of feature 2.

In an implementation, the order of the multiple pieces of third indication information in the target MAC subPDU can be partially determined based on the order relationship specified by the protocol, and the remaining part other than this part is determined based on the order relationship of the second indication information corresponding to the multiple pieces of third indication information in the first message.

Exemplarily, information indicated by the multiple pieces of third indication information may be feature information of feature 2, feature 5, and feature 6.

In the order relationship specified by the protocol, an order relationship of feature 2 and feature 5 is as follows: feature 5 and feature 2. The protocol does not specify an order relationship of feature 6. In the first message, an order relationship of feature 2, feature 5, and feature 6 corresponding to the second indication is as follows: feature 5, feature 6, and feature 2. Thus, the order of the multiple pieces of third indication information in the target MAC subPDU is as follows: feature information of feature 5, feature information of feature 6, and feature information of feature 2.

In this implementation, the order of the multiple pieces of third indication information in the target MAC subPDU is determined based on at least one of the following: the order relationship specified by the protocol; and the order relationship of the second indication information corresponding to the multiple pieces of third indication information in the first message. In this way, the terminal and the network side can reach a consistent understanding of the third indication information, helping the network side to parse the third information reported by the terminal.

Optionally, the terminal-related information includes at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; a a size of an uplink UL CCCH SDU sent by the terminal.

The type of the terminal is used for indicating that the terminal is an eRedCap UE or the terminal is not an eRedCap UE. The terminal-expected feedback manner of the random access message may be a terminal-expected feedback manner of contention resolution information, to be sent to the network-side device, of the random access procedure. Exemplarily, the terminal-expected feedback manner of the random access message may be used for indicating whether the terminal has a capability of PUCCH repetition for Msg4 HARQ-ACK or whether the terminal has a request for performing PUCCH repetition for Msg4 HARQ-ACK. The PUSCH retransmission request information of the terminal is used for indicating the PUSCH retransmission request of the terminal. The PUSCH retransmission capability information of the terminal is used for indicating whether the terminal has the PUSCH retransmission capability. The configuration restriction status information of the terminal can be used for indicating the configuration restriction status caused by MUSIM restrictions. The size of the uplink UL CCCH SDU sent by the terminal can be briefly described as a CCCH length, for example, a CCCH SDU of size 64 bits (CCCH of size 64 bits) or a CCCH SDU of size 48 bits (CCCH of size 48 bits).

In an implementation, when the terminal sends data carried by the CCCH, the data is carried at a preset position in the MAC PDU; and a specially designed subheader format is used. The subheader format is used for indicating at least one of the following: a current subheader corresponds to a CCCH channel; a payload part corresponding to the current subheader includes data carried by the CCCH channel; a type of a terminal sending the subheader; capability information of the terminal sending the subheader; a sending manner of RACH Msg4/MsgB of the terminal sending the subheader; a feedback sending manner of the terminal sending the subheader for RACH Msg4/MsgB; and so on.

Optionally, before the terminal sends the medium access control MAC PDU to the network-side device, the method further includes the following steps:
receiving, by the terminal, fourth indication information sent by the network-side device; and
determining, by the terminal based on the fourth indication information, at least one of the following:
   whether the terminal is allowed to send the first-type MAC subPDU; and
   whether the terminal is allowed to send the third-type MAC subPDU.

In this implementation, the terminal receives the fourth indication information sent by the network-side device; and the terminal determines, based on the fourth indication information, at least one of the following: whether the terminal is allowed to send the first-type MAC subPDU; and whether the terminal is allowed to send the third-type MAC subPDU. In this way, the terminal can determine, based on the fourth indication information, whether the terminal is allowed to send the first-type MAC subPDU or the third-type MAC subPDU, avoiding a case where the network side cannot normally parse the first-type MAC subPDU or the third-type MAC subPDU sent by the terminal.

Optionally, the first indication information is the 1st bit or the last bit of the 1st MAC subheader in the MAC PDU.

The MAC subheader where the first indication information is located may be the 1st MAC subheader in the MAC PDU. The MAC subheader being the 1st MAC subheader in the MAC PDU can be understood as a MAC subheader placed at the beginning of the MAC PDU (placed at the beginning of the MAC PDU).

In an implementation, in a case that the MAC subheader of the target MAC subPDU is the 1st MAC subheader in the MAC PDU, and the first indication information is a first preset value, the target MAC subPDU is the first-type MAC subPDU. When the MAC subheader of the target MAC subPDU is the 1st MAC subheader in the MAC PDU, if the first indication information is a value other than the first preset value, the target MAC subPDU is another type of MAC subPDU other than the first-type MAC subPDU.

In this implementation, in a case that the MAC subheader of the target MAC subPDU is the 1st MAC subheader in the MAC PDU, and the first indication information is the first preset value, the target MAC subPDU is the first-type MAC subPDU. In this way, the remaining MAC subPDUs other than the 1st MAC subPDU in the MAC PDU can be used for other purposes in a field (or a corresponding bit position) where the first indication information is located, thereby enabling the MAC PDU to carry more potential information, and helping to improve the communication efficiency between the terminal and the network side. In addition, the newly added type of MAC subPDU corresponding to the CCCH can be indicated through the first indication information, achieving the extension of the MAC subPDU corresponding to the CCCH without consuming LCID resources.

In an implementation, in a case that the MAC subheader of the target MAC subPDU is the 1st MAC subheader in the MAC PDU, and the first indication information is a second preset value, the LCID included in the target MAC subPDU can be used for indicating that the target MAC subPDU is the second-type MAC subPDU or the fourth-type MAC subPDU. In this way, the remaining MAC subPDUs other than the 1st MAC subPDU in the MAC PDU can be used for other purposes in a field (or a corresponding bit position) where the first indication information is located, thereby enabling the MAC PDU to carry more potential information, helping to improve the communication efficiency between the terminal and the network side. In addition, the first indication information can be used to indicate the type of MAC subPDU corresponding to the CCCH or the MAC subPDU containing the C-RNTI MAC CE as defined in the related art, enabling reuse of the MAC subheaders for such MAC subPDUs from the related art and enhancing usability.

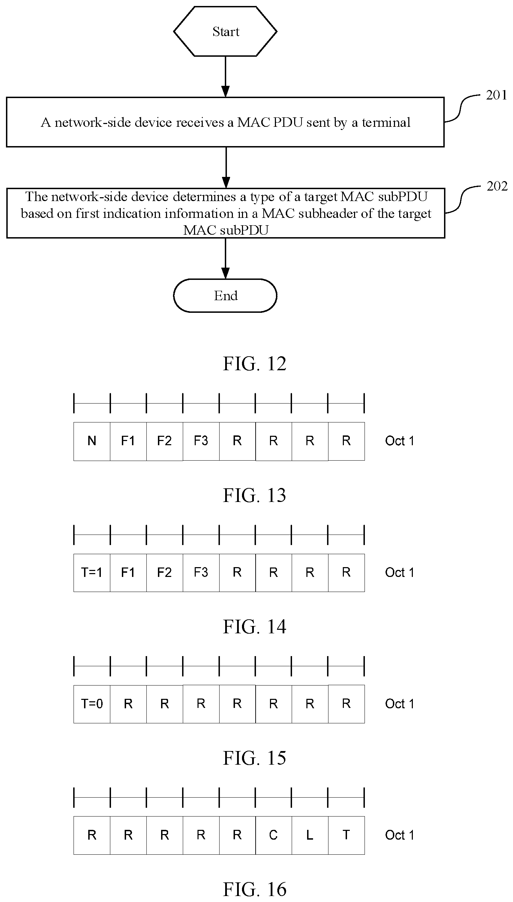

Referring to FIG. 12, FIG. 12 is a flowchart of an information receiving method according to an embodiment of this application. As shown in FIG. 12, the information receiving method includes the following steps.

Step 201: A network-side device receives a MAC PDU sent by a terminal, the MAC PDU including a target MAC subPDU.

Step 202: The network-side device determines a type of the target MAC subPDU based on first indication information in a MAC subheader of the target MAC subPDU, where the first indication information is indication information occupying 1 bit; and the type of the target MAC subPDU includes at least one of the following: a MAC subPDU corresponding to a CCCH; and a MAC subPDU containing a C-RNTI MAC CE.

It should be noted that the network-side device receives the MAC PDU sent by the terminal, the MAC PDU including the target MAC subPDU; where first indication information in the MAC subheader of the target MAC subPDU is used for indicating the type of the target MAC subPDU; the first indication information is the indication information occupying 1 bit; and the type of the target MAC subPDU includes at least one of the following: the MAC subPDU corresponding to the common control channel CCCH; and the MAC subPDU containing the cell radio network temporary identifier C-RNTI MAC control element CE. The network-side device determines the type of the target MAC subPDU based on the first indication information.

Optionally, the determining, by the network-side device, a type of the target MAC subPDU based on first indication information in a MAC subheader of the target MAC subPDU includes the following step:
determining, by the network-side device, the type of the target MAC subPDU based on the first indication information in the MAC subheader of the target MAC subPDU and ordering information of the MAC subheader of the target MAC subPDU in the MAC PDU.

Optionally, the MAC subPDU corresponding to the CCCH includes at least one of the following:
a first-type MAC subPDU, where the first-type MAC subPDU is the MAC subPDU corresponding to CCCH, and a MAC subheader of the first-type MAC subPDU includes no logical channel identity LCID; and
a second-type MAC subPDU, where the second-type MAC subPDU is the MAC subPDU corresponding to the CCCH, and a MAC subheader of the second-type MAC subPDU includes an LCID.

The MAC subPDU containing the C-RNTI MAC CE includes at least one of the following:
a third-type MAC subPDU, where the third-type MAC subPDU is the MAC subPDU containing the C-RNTI MAC CE, and a MAC subheader of the third-type MAC subPDU includes no LCID; and
a fourth-type MAC subPDU, where the fourth-type MAC subPDU is the MAC subPDU containing the C-RNTI MAC CE, and a MAC subheader of the fourth-type MAC subPDU includes an LCID.

Optionally, in a case that the first indication information is a first preset value, the first indication information indicates that the target MAC subPDU is the first-type MAC subPDU.

Optionally, in a case that the first indication information is a second preset value, the first indication information indicates that the target MAC subPDU includes an LCID, and the LCID is used for indicating that the target MAC subPDU is the second-type MAC subPDU or the fourth-type MAC subPDU.

Optionally, the first preset value is 1, or the second preset value is 0.

Optionally, in a case that the first indication information is a second preset value, the first indication information indicates that the target MAC subPDU is the third-type MAC subPDU.

Optionally, the first preset value is 1, and the second preset value is 0; or the first preset value is 0, and the second preset value is 1.

Optionally, a size of the MAC subheader of the first-type MAC subPDU is 1 byte; or
a size of the MAC subheader of the third-type MAC subPDU is 1 byte.

Optionally, before the network-side device receives the MAC PDU sent by the terminal, the method further includes the following step:
sending, by the network-side device, a first message to the terminal, where the first message includes at least one piece of second indication information, and the second indication information indicates terminal-related information that the network-side device allows to be reported or terminal-related information that the network-side device does not allow to be reported.

Optionally, in a case that the target MAC subPDU is the first-type MAC subPDU or the third-type MAC subPDU, the target MAC subPDU includes at least one piece of third indication information, and the third indication information is used for indicating at least one piece of terminal-related information; where
the first indication information and the third indication information are located at different positions in the MAC subheader of the target MAC subPDU.

Optionally, the target MAC subPDU includes multiple pieces of third indication information, and the third indication information at different positions in the MAC subheader are used for indicating different terminal-related information; or
the target MAC subPDU includes one piece of third indication information, and the third indication information with different values is used for indicating terminal-related information of different combinations.

Optionally, in a case that the network-side device sends the first message to the terminal, and the target MAC subPDU includes multiple pieces of third indication information, an order of the multiple pieces of third indication information in the target MAC subPDU is determined based on at least one of the following:
an order relationship specified by the protocol; and
an order relationship of the second indication information corresponding to the multiple pieces of third indication information in the first message.

Optionally, the terminal-related information includes at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an uplink UL CCCH SDU sent by the terminal.

Optionally, before the network-side device receives the MAC PDU sent by the terminal, the method further includes the following step:
sending, by the network-side device, fourth indication information to the terminal, where the fourth indication information is used for indicating at least one of the following:
whether the network-side device is able to receive the first-type MAC subPDU; and
whether the network-side device is able to receive the third-type MAC subPDU.

Optionally, the first indication information is the 1st bit or the last bit of the 1st MAC subheader in the MAC PDU.

It should be noted that this embodiment serves as the implementation of the network-side device corresponding to the embodiment shown in FIG. 11. For the specific implementation, reference can be made to the relevant description of the embodiment shown in FIG. 11. To avoid repetition, this embodiment is not further described.

The information sending method and information receiving method provided by the embodiments of this application are described below through several specific embodiments:

### Embodiment 1:

In this embodiment, as shown in FIG. 13, first indication information is the 1st bit in a target MAC subPDU of a MAC PDU. Exemplarily, the 1st bit can be described as an N (NEW) field. The MAC PDU is carried by Msg3 or MSGA PUSCH. The target MAC subPDU is a first-type MAC subPDU.

For a MAC subPDU corresponding to a CCCH, the N field is set to 1; the remaining fields other than the N field can be used for indicating terminal-related information.

### Exemplarily:

F1: feature (feature) 1, for example, identifying a size of UL CCCH SDU. When F1 takes a first value, a corresponding CCCH has a first length, for example, 64 bits. When F1 takes a second value, a corresponding CCCH has a second length, for example, 48 bits.

F2: feature 2, for example, identifying a type of UE. Exemplarily, when F2 takes a first value, a corresponding UE is a RedCap terminal. When F2 takes a second value, a corresponding UE is a non-RedCap terminal.

F3: feature 3, for example, identifying whether Msg4 transmission uses an NTN special mechanism. For example, when F3 takes a first value, the special mechanism is used. When F3 takes a second value, the special mechanism is not used.

If there are more features, the R field can be replaced with an FX field (X is a number), and so on.

It should be noted that in a case that a terminal not supporting the first-type MAC subPDU and a terminal supporting the first-type MAC subPDU are both present in a network, the N field is available for a cell allowing the first-type MAC subPDU to determine whether the UE initiating RACH has sent the first-type MAC subPDU, thereby determining a format of a subheader of the MAC subPDU.

In an example where the MAC PDU is Msg3, since in the related art, the 1st bit of a MAC subPDU is an R field, that is, the 1st bit of the MAC PDU is 0 (as shown in FIG. 7, FIG. 8, or FIG. 9), if the network side finds that the 1st bit of the MAC subPDU is set to 1, it indicates that this is the N field, and meanings of the subsequent fields are determined according to the format shown in FIG. 13.

In this case, for UE supporting the first-type MAC subPDU, if Msg3 carries the C-RNTI MAC CE, it still uses the subheader format in the related art, that is, the format shown in FIG. 8. A value of an R bit is 0; and a value of an LCID is 56 (an LCID corresponding to the C-RNTI MAC CE in the NR protocol).

It should be noted that the N field (that is, the first indication information) is not limited to the 1st bit of the MAC subheader of the MAC subPDU. The N field may be any bit in the MAC subheader of the MAC subPDU whose function has not yet been defined, such as the R bit.

### Embodiment 2:

In this embodiment, as shown in FIG. 14 and FIG. 15, first indication information is the 1st bit in a target MAC subPDU of a MAC PDU. Exemplarily, the 1st bit can be described as a T (Type) field. The MAC PDU is carried by Msg3 or MSGA PUSCH, and the target MAC subPDU is a first-type MAC subPDU or a third-type MAC subPDU.

When T takes a first value (such as 1), the MAC PDU carries a CCCH, and the target MAC subPDU is the first-type MAC subPDU. Values of F1, F2, and F3 are the same as those in Embodiment 1.

When T takes a second value (such as 0), Msg3 carries a C-RNTI MAC CE, and the target MAC subPDU is the third-type MAC subPDU. Other bits are R bits. The R bits can be used for indicating terminal-related information, and the R bits can serve as F1, F2, and F3. Values of F1, F2, and F3 are the same as those in Embodiment 1.

In this way, there is no need to allocate LCIDs for the CCCH and the C-RNTI MAC CE.

It should be noted that this embodiment is applicable to a case where there are no terminals in the network that do not support the first-type MAC subPDU and the third-type MAC subPDU, that is, all UEs in the network support the first-type MAC subPDU and the third-type MAC subPDU. For example, the network is a 6G network or the UE is connected to a 6G cell.

Exemplarily, one representation form of the target MAC subPDU in this embodiment is shown in FIG. 16, where the CCCH or the C-RNTI MAC CE is placed at a specified position in Msg3 or MSGA PUSCH. For example, the target MAC subPDU is the 1st MAC subPDU of Msg3 or MSGA PUSCH. The T field indicates that the target MAC subPDU is a MAC subPDU corresponding to the CCCH or the target MAC subPDU contains the C-RNTI MAC CE. If the T field indicates that the target MAC subPDU is the MAC subPDU corresponding to the CCCH, in the remaining 7 bits of a MAC subheader of the target MAC subPDU, 2 bits are used, and 5 bits are reserved. The 2 bits are an L field and a C field. The L field indicates a size of a UL CCCH SDU, for example, indicating that the size of the UL CCCH SDU is 48 bits or 64 bits. The C field indicates UE capability, for example, indicating that the UE is a non-RedCap terminal or the UE is a RedCap terminal. If the T field indicates that the target MAC subPDU contains the C-RNTI MAC CE, the remaining 7 bits of the MAC subheader of the target MAC subPDU are reserved.

It should be noted that the T field (that is, the first indication information) is not limited to the 1st bit of the MAC subheader of the MAC subPDU. The T field may be any bit in the MAC subheader of the MAC subPDU whose function has not yet been defined, such as the R bit.

### Embodiment 3:

In this embodiment, a target MAC subPDU of a MAC PDU is located at a special position in the MAC PDU. For example, the target MAC subPDU is the 1st MAC subheader of the MAC PDU. First indication information in a MAC subheader of the target MAC subPDU is used for indicating a type of the target MAC subPDU. The first indication information is indication information occupying 1 bit. The type of the target MAC subPDU includes at least one of the following: a MAC subPDU corresponding to a CCCH; and a MAC subPDU containing a C-RNTI MAC CE. The MAC PDU is carried by Msg3 or MsgA PUSCH.

In this way, for MAC subheaders at other positions, the subheaders do not need to include the N field in Embodiment 1 or the T field in Embodiment 2, that is, the 1st bits of MAC subPDUs other than the target MAC subPDU can be used for other purposes. It should be noted that the N field or T field is not limited to the 1st bit of the MAC subheader of the MAC subPDU. The N field or T field may be any bit in the MAC subheader of the MAC subPDU whose function has not yet been defined, such as an R bit.

### Embodiment 4:

In this embodiment, first indication information is the 1st bit in a target MAC subPDU of a MAC PDU. Exemplarily, the 1st bit can be described as an N (NEW) field. The MAC PDU is carried by Msg3 or MsgA PUSCH. The target MAC subPDU is a first-type MAC subPDU.

For a MAC subPDU corresponding to a CCCH, the N field is set to 1; and the remaining fields other than the N field can be used for indicating terminal-related information.

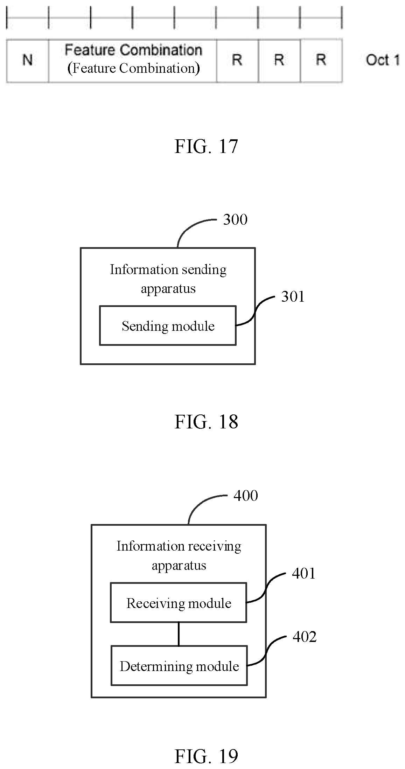

As shown in FIG. 17, multiple features can be jointly encoded, and a feature combination (Feature Combination) field is used for indication.

As shown in Table 2, the following feature combinations may be present.

**Table 2**

| Feature combination field | Length of CCCH | Type of UE | PUCCH repetition for Msg4 HARQ-ACK |
|---|---|---|---|
| First value | 48 | eRedCap UE | Yes |
| Second value | 48 | eRedCap UE | No |
| Third value | 48 | Non-eRedCap UE | Yes |
| Fourth value | 48 | Non-eRedCap UE | No |
| Fifth value | 64 | eRedCap UE | Yes |
| Sixth value | 64 | eRedCap UE | No |
| Seventh value | 64 | Non-eRedCap UE | Yes |
| Eighth value | 64 | Non-eRedCap UE | No |

In a similar manner, further combinations can be enumerated.

It should be noted that this embodiment of this application does not specify the specific naming of the feature combination field. For example, the feature combination field may reuse the name or length of an LCID field. The feature combination field should be regarded as a field different from the LCID field in the related art, because its meaning is different from the meaning of the LCID field in the related art.

In this case, for UE supporting the first-type MAC subPDU, if Msg3 carries a C-RNTI MAC CE, it still uses the format in the related art, that is, the format shown in FIG. 8. A value of an R bit is 0, and a value of an LCID is 56.

It should be noted that for the feature combinations taking the fourth value and the eighth value in Table 3, because the protocol in the related art has already specified such combinations, they can be represented by the subheader format shown in FIG. 8, and the corresponding LCID values are as shown in Table 3.

**Table 3**

| Codepoint/Index | LCID values |
|---|---|
| 0 | CCCH of size 64 bits (referred to as "CCCH1" in TS 38.331 [5]), except for a RedCap UE |
| 52 | CCCH of size 48 bits (referred to as "CCCH" in TS 38.331 [5]), except for a RedCap UE |

In this way, the fourth value and the eighth value in Feature Combination can be saved for indicating other feature combinations. The LCID values corresponding to the fourth value and the eighth value in Feature Combination are as shown in the following Table 4.

**Table 4**

| LCID | Length of CCCH | Type of UE | PUCCH repetition for Msg4 HARQ-ACK |
|---|---|---|---|
| 52 | 48 | Non-eRedCap UE | No |
| 0 | 64 | Non-eRedCap UE | No |

### Embodiment 5:

The UE receives a system message and determines, based on an indication field in the system message, whether a current cell allows to send a MAC subheader of a first-type MAC subPDU or a MAC subheader of a third-type MAC subPDU.

Exemplarily, features supported by a current cell and reported using Msg3 are not defined in NR R17. A network side indicates, through an explicit indication field, that the MAC subheader of the first-type MAC subPDU or the MAC subheader of the third-type MAC subPDU is allowed to be sent.

The UE sets and sends the MAC subheader of the first-type MAC subPDU or the MAC subheader of the third-type MAC subPDU according to the features supported by the current cell.

This embodiment of this application changes a conventional method where carrying indication information in Msg3 consumes LCIDs, which enhances LCID utilization efficiency, helps prevent rapid LCID exhaustion, and solves the problem of how to indicate newly defined information using Msg3 after LCIDs are exhausted.

### Embodiment 6:

The UE reports at least one of the following in Msg3 and MsgA PUSCH:
channel quality information, PUSCH retransmission request information; PUSCH retransmission capability information, configuration restriction information/indication (such as for MUSIM), or the like.

### Embodiment 7:

Considering that there is a lot of information that needs to be indicated by MsgA PUSCH or Msg3, but its information carrying capacity is limited or the number of bits available for related purposes is limited, a network side (such as a cell (Cell)) carries indication information in system information to indicate a set of features supported for reporting in the cell.

Available bits/fields in MsgA PUSCH or Msg3 and features can be dynamically mapped per (per) cell.

Examples are described below.

It is assumed that there are 3 bits in MsgA PUSCH or Msg3 for carrying uplink indications.

Cell1 informs a terminal through broadcast that features supported for reporting in the cell are feature 1, feature 2, and feature 3. It is assumed that the protocol specifies that each of the above features requires 1 bit for reporting.

Cell2 informs the terminal through broadcast that the features supported for reporting in the cell are feature 1 and feature 4. It is assumed that the protocol specifies that feature 1 requires 1 bit for reporting, and feature 4 requires 2 bits for reporting.

In this way, the information carried by MsgA PUSCH or Msg3 is not uniformly specified by the protocol, but configured for the terminal by each cell through a broadcast message. A meaning/feature indicated by a bit at a same position in MsgA PUSCH or Msg3 sent by UE in different cells may be different. For example, for indicating a feature, in a subheader corresponding to a CCCH or a C-RNTI MAC CE may indicate a different feature for different cells.

In addition, each cell needs to ensure that the number of bits required to enable reporting of features does not exceed the number of bits available in MsgA PUSCH or Msg3 for feature reporting.

When a cell enables reporting of multiple features, the protocol can specify a relative order relationship of features enabled for reporting in MsgA PUSCH or Msg3, so that the network side and the UE have a consistent understanding on the bits used for feature reporting in MsgA PUSCH or Msg3. Exemplarily, Msg3 has 3 bits available for feature reporting, and the cell enables reporting of features 1, 2, and 3, thus it can be determined, based on a relative order relationship specified by the protocol, that the 1st bit corresponds to feature 1, feature 2, or feature 3. Alternatively, an order of the reported features in MsgA PUSCH or Msg3 can be determined according to an order of features enabled for reporting in the broadcast message. Exemplarily, the subheader corresponding to the CCCH or the C-RNTI MAC CE in Msg3 has 3 bits available for feature reporting. The network side supports reporting of a total of 5 features, that is, each cell selects X features from 5 features for reporting, and the total number of bits required for reporting the X features does not exceed 3. Cell1 indicates "01001" to the UE in the broadcast message, and Cell2 indicates "10011" to the UE in the broadcast message.

It indicates that Cell1 selects features 2 and 5 for reporting, and Cell2 selects features 1, 4, and 5 for reporting. For cell1, the UE sets 3 bits used for feature reporting in Msg3, where the first bit is used for reporting feature 2, the second bit is used for reporting feature 5, and the third bit is set to a preset value. The reason for setting to the preset value is that the network side has not enabled reporting. For cell2, the UE sets 3 bits used for feature reporting in Msg3, where the first bit is used for reporting feature 1, the second bit is used for reporting feature 4, and the third bit is used for reporting feature 5. Here, the first bit refers to the most significant bit (most significant bit) or the least significant bit (least significant bit) used for feature reporting.

An execution subject of the information sending method provided by the embodiments of this application may be an information sending apparatus. In the embodiments of this application, the information sending method being executed by the information sending apparatus is used as an example to describe an information sending apparatus according to an embodiment of this application.

Referring to FIG. 18, FIG. 18 is a structural diagram of an information sending apparatus according to an embodiment of this application. A terminal includes the information sending apparatus. As shown in FIG. 18, the information sending apparatus 300 includes:
a sending module 301, configured to send a medium access control MAC protocol data unit PDU to a network-side device, the MAC PDU including a target MAC subPDU; where
first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

Optionally, the first indication information and ordering information are used for jointly indicating the type of the target MAC subPDU, and the ordering information is used for indicating an order of the MAC subheader of the target MAC subPDU in the MAC PDU.

Optionally, the MAC subPDU corresponding to the CCCH includes at least one of the following:
a first-type MAC subPDU, where the first-type MAC subPDU is the MAC subPDU corresponding to the CCCH, and a MAC subheader of the first-type MAC subPDU includes no logical channel identity LCID; and
a second-type MAC subPDU, where the second-type MAC subPDU is a MAC subPDU corresponding to the CCCH, and a MAC subheader of the second-type MAC subPDU includes an LCID.

The MAC subPDU containing the C-RNTI MAC CE includes at least one of the following:
a third-type MAC subPDU, where the third-type MAC subPDU is the MAC subPDU containing the C-RNTI MAC CE, and a MAC subheader of the third-type MAC subPDU includes no LCID; and
a fourth-type MAC subPDU, where the fourth-type MAC subPDU is the MAC subPDU containing the C-RNTI MAC CE, and a MAC subheader of the fourth-type MAC subPDU includes an LCID.

Optionally, in a case that the first indication information is a first preset value, the first indication information indicates that the target MAC subPDU is the first-type MAC subPDU.

Optionally, in a case that the first indication information is a second preset value, the first indication information indicates that the target MAC subPDU includes an LCID, and the LCID is used for indicating that the target MAC subPDU is the second-type MAC subPDU or the fourth-type MAC subPDU.

Optionally, the first preset value is 1, or the second preset value is 0.

Optionally, in a case that the first indication information is a second preset value, the first indication information indicates that the target MAC subPDU is the third-type MAC subPDU.

Optionally, the first preset value is 1, and the second preset value is 0; or the first preset value is 0, and the second preset value is 1.

Optionally, a size of the MAC subheader of the first-type MAC subPDU is 1 byte; or
a size of the MAC subheader of the third-type MAC subPDU is 1 byte.

Optionally, the apparatus further includes:
a first receiving module, configured to receive a first message sent by the network-side device, where the first message includes at least one piece of second indication information, and the second indication information indicates terminal-related information that the network-side device allows to be reported or terminal-related information that the network-side device does not allow to be reported; and
a first determining module, configured to determine, based on the second indication information, any one of the following:
   the terminal is allowed to report the terminal-related information corresponding to the second indication information; or
   the terminal is not allowed to report the terminal-related information corresponding to the second indication information.

Optionally, in a case that the target MAC subPDU is the first-type MAC subPDU or the third-type MAC subPDU, the target MAC subPDU includes at least one piece of third indication information, and the third indication information is used for indicating at least one piece of terminal-related information; where
the first indication information and the third indication information are located at different positions in the MAC subheader of the target MAC subPDU.

Optionally, the target MAC subPDU includes multiple pieces of third indication information, and the third indication information at different positions in the MAC subheader is used for indicating different terminal-related information; or
the target MAC subPDU includes one piece of third indication information, and the third indication information with different values is used for indicating terminal-related information of different combinations.

Optionally, in a case that the terminal receives the first message sent by the network-side device, the apparatus further includes:
a second determining module, configured to determine, based on the second indication information, the third indication information in the target MAC subPDU.

Optionally, in a case that the target MAC subPDU includes multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

Optionally, the terminal-related information includes at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an uplink UL CCCH SDU sent by the terminal.

Optionally, the apparatus further includes:
a second receiving module, configured to receive fourth indication information sent by the network-side device; and
a third determining module, configured to determine, based on the fourth indication information, at least one of the following:
   whether the terminal is allowed to send the first-type MAC subPDU; and
   whether the terminal is allowed to send the third-type MAC subPDU.

Optionally, the first indication information is the 1st bit or the last bit of the 1st MAC subheader in the MAC PDU.

The information sending apparatus in this embodiment of this application may be an electronic device, for example an electronic device having an operating system, or may be a component of an electronic device, for example, an integrated circuit or a chip. The electronic device may be a terminal or other devices than the terminal. Exemplarily, the terminal may include but is not limited to the types of the terminal 11 listed above, and other devices may be servers, network attached storage (Network Attached Storage, NAS), or the like. This is not specifically limited in this embodiment of this application.

The information sending apparatus according to this embodiment of this application can implement the processes implemented by the method embodiment in FIG. 11, with the same technical effects achieved. To avoid repetition, details are not described herein again.

Referring to FIG. 19, FIG. 19 is a structural diagram of an information receiving apparatus according to an embodiment of this application. A network-side device includes the information receiving apparatus. As shown in FIG. 19, the information receiving apparatus 400 includes:
a receiving module 401, configured to receive a MAC PDU sent by a terminal, the MAC PDU including a target MAC subPDU; and
a determining module 402, configured to determine a type of the target MAC subPDU based on first indication information in a MAC subheader of the target MAC subPDU, where the first indication information is indication information occupying 1 bit; and the type of the target MAC subPDU includes at least one of the following: a MAC subPDU corresponding to CCCH; and a MAC subPDU containing a C-RNTI MAC CE.

Optionally, the determining module is specifically configured to:
determine the type of the target MAC subPDU based on the first indication information in the MAC subheader of the target MAC subPDU and ordering information of the MAC subheader of the target MAC subPDU in the MAC PDU.

Optionally, the MAC subPDU corresponding to the CCCH includes at least one of the following:
a first-type MAC subPDU, where the first-type MAC subPDU is the MAC subPDU corresponding to the CCCH, and a MAC subheader of the first-type MAC subPDU includes no logical channel identity LCID; and
a second-type MAC subPDU, where the second-type MAC subPDU is the MAC subPDU corresponding to the CCCH, and a MAC subheader of the second-type MAC subPDU includes an LCID.

The MAC subPDU containing the C-RNTI MAC CE includes at least one of the following:
a third-type MAC subPDU, where the third-type MAC subPDU is the MAC subPDU containing the C-RNTI MAC CE, and a MAC subheader of the third-type MAC subPDU includes no LCID; and
a fourth-type MAC subPDU, where the fourth-type MAC subPDU is the MAC subPDU containing the C-RNTI MAC CE, and a MAC subheader of the fourth-type MAC subPDU includes an LCID.

Optionally, in a case that the first indication information is a first preset value, the first indication information indicates that the target MAC subPDU is the first-type MAC subPDU.

Optionally, in a case that the first indication information is a second preset value, the first indication information indicates that the target MAC subPDU includes an LCID, and the LCID is used for indicating that the target MAC subPDU is the second-type MAC subPDU or the fourth-type MAC subPDU.

Optionally, the first preset value is 1, or the second preset value is 0.

Optionally, in a case that the first indication information is a second preset value, the first indication information indicates that the target MAC subPDU is the third-type MAC subPDU.

Optionally, the first preset value is 1, and the second preset value is 0; or the first preset value is 0, and the second preset value is 1.

Optionally, a size of the MAC subheader of the first-type MAC subPDU is 1 byte; or
a size of the MAC subheader of the third-type MAC subPDU is 1 byte.

Optionally, the apparatus further includes:
a first sending module, configured to send a first message to the terminal, where the first message includes at least one piece of second indication information, and the second indication information indicates terminal-related information that the network-side device allows to be reported or terminal-related information that the network-side device does not allow to be reported.

Optionally, in a case that the target MAC subPDU is the first-type MAC subPDU or the third-type MAC subPDU, the target MAC subPDU includes at least one piece of third indication information, and the third indication information is used for indicating at least one piece of terminal-related information; where
the first indication information and the third indication information are located at different positions in the MAC subheader of the target MAC subPDU.

Optionally, the target MAC subPDU includes multiple pieces of third indication information, and the third indication information at different positions in the MAC subheader is used for indicating different terminal-related information; or
the target MAC subPDU includes one piece of third indication information, and the third indication information with different values is used for indicating terminal-related information of different combinations.

Optionally, in a case that the network-side device sends a first message to the terminal, and the target MAC subPDU includes multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

Optionally, the terminal-related information includes at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an uplink UL CCCH SDU sent by the terminal.

Optionally, the apparatus further includes:
a second sending module, configured to send fourth indication information to the terminal, where the fourth indication information is used for indicating at least one of the following:
whether the network-side device is able to receive the first-type MAC subPDU; and
whether the network-side device is able to receive the third-type MAC subPDU.

Optionally, the first indication information is the 1st bit or the last bit of the 1st MAC subheader in the MAC PDU.

The information receiving apparatus in this embodiment of this application may be an electronic device, for example an electronic device having an operating system, or may be a component of an electronic device, for example, an integrated circuit or a chip. The electronic device may be a terminal or other devices than the terminal. Exemplarily, the terminal may include but is not limited to the types of the terminal 11 listed above, and other devices may be servers, network attached storage (Network Attached Storage, NAS), or the like. This is not specifically limited in this embodiment of this application.

The information receiving apparatus according to this embodiment of this application can implement the processes implemented by the method embodiment in FIG. 12, with the same technical effects achieved. To avoid repetition, details are not described herein again.

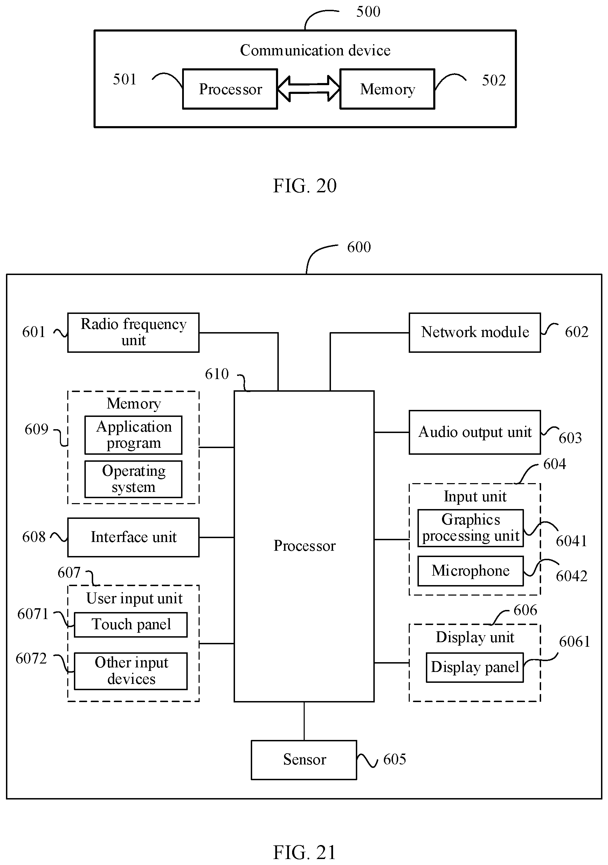

Optionally, as shown in FIG. 20, an embodiment of this application further provides a communication device 500 including a processor 501 and a memory 502, where a program or instructions capable of running on the processor 501 are stored on the memory 502. For example, in a case that the communication device 500 is a terminal, when the program or instructions are executed by the processor 501, the steps of the above information sending method embodiment applied to the terminal are implemented, with the same technical effects achieved. To avoid repetition, details are not described herein again. In a case that the communication device 500 is a network-side device, when the program or instructions are executed by the processor 501, the steps of the above information receiving method embodiment applied to the network-side device are implemented, with the same technical effects achieved. To avoid repetition, details are not described herein again.

An embodiment of this application further provides a terminal including a processor and a communication interface. The communication interface is coupled to the processor. The processor is configured to execute a program or instructions to implement the steps in the method embodiment shown in FIG. 11. This terminal embodiment corresponds to the above terminal side method embodiment. All processes and implementations in the foregoing method embodiment are applicable to this terminal embodiment, with the same technical effects achieved.

Specifically, FIG. 21 is a schematic diagram of a hardware structure of a terminal implementing an embodiment of this application.

The terminal 600 includes but is not limited to at least some components of a radio frequency unit 601, a network module 602, an audio output unit 603, an input unit 604, a sensor 605, a display unit 606, a user input unit 607, an interface unit 608, a memory 609, a processor 610, and the like.

Those skilled in the art can understand that the terminal 600 may further include a power supply (such as a battery) for supplying power to various components. The power supply may be logically connected to the processor 610 through a power management system, thereby implementing functions such as charging, discharging, and power consumption management through the power management system. A terminal structure shown in FIG. 21 does not constitute any limitation on the terminal, and the terminal may include more or fewer components than shown in the figure, or combine some of the components, or have different arrangements of the components. Details are not described herein.

It should be understood that in this embodiment of this application, the input unit 604 may include a graphics processing unit (Graphics Processing Unit, GPU) 6041 and a microphone 6042. The GPU 6041 processes image data of a static picture or video obtained by an image capture apparatus (such as a camera) in an image capture or a video capture mode. The display unit 606 may include a display panel 6061, and the display panel 6061 can be configured in a form of a liquid crystal display, an organic light emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power on/off button), a trackball, a mouse, a joystick, and the like. Details are not described herein again.

In this embodiment of this application, after receiving downlink data from the network-side device, the radio frequency unit 601 transmits the downlink data to the processor 610 for processing. In addition, the radio frequency unit 601 can transmit uplink data to the network-side device. Typically, the radio frequency unit 601 includes but is not limited to an antenna, an amplifier, a transceiver, a coupler, a low noise amplifier, a duplexer, and the like.

The memory 609 can be used for storing software programs or instructions as well as various data. The memory 609 may mainly include a first storage area storing programs or instructions and a second storage area storing data, where the first storage area can store an operating system, an application program or instructions required by at least one function (such as a sound playback function or an image playback function). In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 609 in this embodiment of this application includes but is not limited to these and any other suitable types of memories.

The processor 610 may include one or more processing units. Optionally, the processor 610 integrates an application processor and a modem processor, where the application processor mainly processes operations related to the operating system, user interface, application programs, and the like. The modem processor mainly processes wireless communication signals, such as a baseband processor. It can be understood that the above modem processor may alternatively be not integrated into the processor 610.

The radio frequency unit 601 is configured to:
send a medium access control MAC protocol data unit PDU to a network-side device, the MAC PDU including a target MAC subPDU; where
first indication information in a MAC subheader of the target MAC subPDU is used for indicating a type of the target MAC subPDU; the first indication information is indication information occupying 1 bit; and the type of the target MAC subPDU includes at least one of the following: a MAC subPDU corresponding to a common control channel CCCH; and a MAC subPDU containing a cell radio network temporary identifier C-RNTI MAC control element CE.

Optionally, the first indication information and ordering information are used for jointly indicating the type of the target MAC subPDU, and the ordering information is used for indicating an order of the MAC subheader of the target MAC subPDU in the MAC PDU.

Optionally, the MAC subPDU corresponding to the CCCH includes at least one of the following:
a first-type MAC subPDU, where the first-type MAC subPDU is the MAC subPDU corresponding to the CCCH, and a MAC subheader of the first-type MAC subPDU includes no logical channel identity LCID; and
a second-type MAC subPDU, where the second-type MAC subPDU is the MAC subPDU corresponding to the CCCH, and a MAC subheader of the second-type MAC subPDU includes an LCID.

The MAC subPDU containing the C-RNTI MAC CE includes at least one of the following:
a third-type MAC subPDU, where the third-type MAC subPDU is the MAC subPDU containing the C-RNTI MAC CE, and a MAC subheader of the third-type MAC subPDU includes no LCID; and
a fourth-type MAC subPDU, where the fourth-type MAC subPDU is the MAC subPDU containing the C-RNTI MAC CE, and a MAC subheader of the fourth-type MAC subPDU includes an LCID.

Optionally, in a case that the first indication information is a first preset value, the first indication information indicates that the target MAC subPDU is the first-type MAC subPDU.

Optionally, in a case that the first indication information is a second preset value, the first indication information indicates that the target MAC subPDU includes an LCID, and the LCID is used for indicating that the target MAC subPDU is the second-type MAC subPDU or the fourth-type MAC subPDU.

Optionally, the first preset value is 1, or the second preset value is 0.

Optionally, in a case that the first indication information is a second preset value, the first indication information indicates that the target MAC subPDU is the third-type MAC subPDU.

Optionally, the first preset value is 1, and the second preset value is 0; or the first preset value is 0, and the second preset value is 1.

Optionally, a size of the MAC subheader of the first-type MAC subPDU is 1 byte; or
a size of the MAC subheader of the third-type MAC subPDU is 1 byte.

Optionally, the radio frequency unit 601 is further configured to: receive a first message sent by the network-side device, where the first message includes at least one piece of second indication information, and the second indication information indicates terminal-related information that the network-side device allows to be reported or terminal-related information that the network-side device does not allow to be reported.

The processor 610 is configured to: determine, based on the second indication information, any one of the following:
the terminal is allowed to report the terminal-related information corresponding to the second indication information; or
the terminal is not allowed to report the terminal-related information corresponding to the second indication information.

Optionally, in a case that the target MAC subPDU is the first-type MAC subPDU or the third-type MAC subPDU, the target MAC subPDU includes at least one piece of third indication information, and the third indication information is used for indicating at least one piece of terminal-related information; where
the first indication information and the third indication information are located at different positions in the MAC subheader of the target MAC subPDU.

Optionally, the target MAC subPDU includes multiple pieces of third indication information, and the third indication information at different positions in the MAC subheader is used for indicating different terminal-related information; or
the target MAC subPDU includes one piece of third indication information, and the third indication information with different values is used for indicating terminal-related information of different combinations.

Optionally, in a case that the terminal receives the first message sent by the network-side device, the processor 610 is configured to:
determine, based on the second indication information, the third indication information in the target MAC subPDU.

Optionally, in a case that the target MAC subPDU includes multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

Optionally, the terminal-related information includes at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an uplink UL CCCH SDU sent by the terminal.

Optionally, the radio frequency unit 601 is further configured to: receive fourth indication information sent by the network-side device.

The processor 610 is configured to: determine, based on the fourth indication information, at least one of the following:
whether the terminal is allowed to send the first-type MAC subPDU; and
whether the terminal is allowed to send the third-type MAC subPDU.

Optionally, the first indication information is the 1st bit or the last bit of the 1st MAC subheader in the MAC PDU.

It can be understood that the processes of the various implementations mentioned in this embodiment can refer to the relevant description of the method embodiment in FIG. 10, with the same or corresponding technical effects achieved. To avoid repetition, details are not described herein again.

Specifically, the terminal in this embodiment of this application further includes: instructions or a program stored on the memory 609 and capable of running on the processor 610. The processor 610 invokes the instructions or program in the memory 609 to execute the methods performed by the various modules shown in FIG. 18, with the same or corresponding technical effects achieved. To avoid repetition, details are not described herein again.

An embodiment of this application further provides a network-side device including a processor and a communication interface, where the communication interface is coupled to the processor, and the processor is configured to run a program or instructions to implement the steps of the method embodiment shown in FIG. 11. This network-side device embodiment corresponds to the above information receiving method embodiment applied to the network-side device. The processes and implementations of the above method embodiment can be applied to this network-side device embodiment, with the same technical effects achieved.

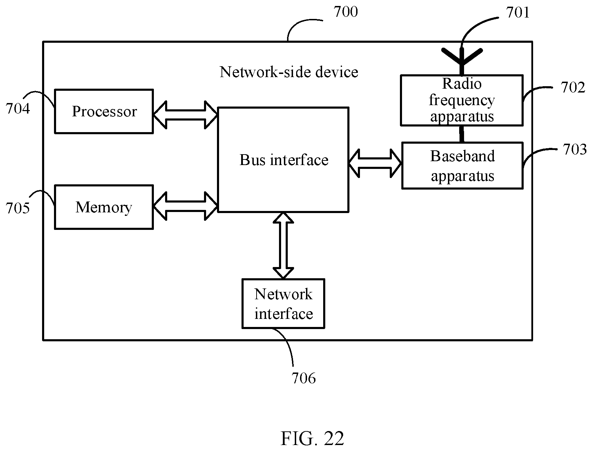

Specifically, an embodiment of this application further provides a network-side device. As shown in FIG. 22, the network-side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701 and sends the received information to the baseband apparatus 703 for processing. In a downlink direction, the baseband apparatus 703 processes information to be sent and sends the information to be sent to the radio frequency apparatus 702. After the radio frequency apparatus 702 processes the received information and sends the information out through the antenna 701.

The method executed by the network-side device in the above embodiments can be implemented in the baseband apparatus 703, and the baseband apparatus 703 includes a baseband processor.

The baseband apparatus 703 may include, for example, at least one baseband board, where multiple chips are disposed on the baseband board. As shown in FIG. 22, one of the chips is, for example, the baseband processor and is connected to the memory 705 through a bus interface, to invoke a program in the memory 705 to perform the operations of the network-side device as described in the foregoing method embodiments.

The network-side device may further include a network interface 706, where the interface is, for example, a common public radio interface (Common Public Radio Interface, CPRI).

Specifically, the network-side device 700 in this embodiment of this application further includes: instructions or a program stored on the memory 705 and capable of running on the processor 704. The processor 704 invokes the instructions or program in the memory 705 to execute the methods performed by the various modules shown in FIG. 19, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing information sending method embodiment or information receiving method embodiment are implemented, with the same technical effects achieved. To avoid repetition, details are not described herein again.

The processor is the processor in the terminal described in the above embodiment. The readable storage medium includes a computer readable storage medium, such as a computer read-only memory ROM, a random access memory RAM, a magnetic disk, or an optical disc. In some examples, the readable storage medium may be a non-transient readable storage medium.

An embodiment of this application further provides a chip, where the chip includes a processor and a communication interface, the communication interface is coupled to the processor, and the processor is configured to run a program or instructions to implement various processes of the foregoing information sending method embodiment or information receiving method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement various processes of the foregoing information sending method embodiment or information receiving method embodiment, with the same technical effects achieved. To avoid repetition, details are not described herein again.

An embodiment of this application further provides an information transceiving system including: a terminal and a network-side device, where the terminal can be configured to perform the steps of the foregoing information sending method applied to the terminal, and the network-side device can be configured to perform the steps of the foregoing information receiving method applied to the network-side device.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the implementations of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

From the description of the foregoing implementations, those skilled in the art can clearly understand that the method in the foregoing embodiments may be implemented by a computer software product in combination with a necessary general hardware platform. Certainly, the method in the foregoing embodiments may alternatively be implemented by hardware. The computer software product is stored in a storage medium (for example, a ROM, a RAM, a magnetic disk, or an optical disc), and includes several instructions for instructing a terminal or a network-side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, those of ordinary skill in the art may develop many forms of implementations without departing from the essence of this application and the protection scope of the claims, and all these implementations shall fall within the protection scope of this application.

## Claims

1. An information sending method, comprising:
sending, by a terminal, a medium access control MAC protocol data unit PDU to a network-side device, the MAC PDU comprising a target MAC subPDU; wherein
first indication information in a MAC subheader of the target MAC subPDU is used for indicating a type of the target MAC subPDU; the first indication information is indication information occupying 1 bit; and the type of the target MAC subPDU comprises at least one of the following: a MAC subPDU corresponding to a common control channel CCCH; and a MAC subPDU containing a cell radio network temporary identifier C-RNTI MAC control element CE.

2. The method according to claim 1, wherein the first indication information and ordering information are used for jointly indicating the type of the target MAC subPDU, and the ordering information is used for indicating an order of the MAC subheader of the target MAC subPDU in the MAC PDU.

3. The method according to claim 1 or 2, wherein
the MAC subPDU corresponding to the CCCH comprises at least one of the following:
a first-type MAC subPDU, wherein the first-type MAC subPDU is the MAC subPDU corresponding to the CCCH, and a MAC subheader of the first-type MAC subPDU comprises no logical channel identity LCID; and
a second-type MAC subPDU, wherein the second-type MAC subPDU is the MAC subPDU corresponding to the CCCH, and a MAC subheader of the second-type MAC subPDU comprises an LCID; and
the MAC subPDU containing the C-RNTI MAC CE comprises at least one of the following:
a third-type MAC subPDU, wherein the third-type MAC subPDU is the MAC subPDU containing the C-RNTI MAC CE, and a MAC subheader of the third-type MAC subPDU comprises no LCID; and
a fourth-type MAC subPDU, wherein the fourth-type MAC subPDU is the MAC subPDU containing the C-RNTI MAC CE, and a MAC subheader of the fourth-type MAC subPDU comprises an LCID.

4. The method according to claim 3, wherein in a case that the first indication information is a first preset value, the first indication information indicates that the target MAC subPDU is the first-type MAC subPDU.

5. The method according to claim 3 or 4, wherein in a case that the first indication information is a second preset value, the first indication information indicates that the target MAC subPDU comprises an LCID, and the LCID is used for indicating that the target MAC subPDU is the second-type MAC subPDU or the fourth-type MAC subPDU.

6. The method according to claim 4 or 5, wherein the first preset value is 1, or the second preset value is 0.

7. The method according to claim 3 or 4, wherein in a case that the first indication information is a second preset value, the first indication information indicates that the target MAC subPDU is the third-type MAC subPDU.

8. The method according to claim 4 or 7, wherein the first preset value is 1, and the second preset value is 0; or the first preset value is 0, and the second preset value is 1.

9. The method according to any one of claims 3 to 8, wherein a size of the MAC subheader of the first-type MAC subPDU is 1 byte; or
a size of the MAC subheader of the third-type MAC subPDU is 1 byte.

10. The method according to any one of claims 3 to 9, wherein before the sending, by a terminal, a MAC PDU to a network-side device, the method further comprises:
receiving, by the terminal, a first message sent by the network-side device, wherein the first message comprises at least one piece of second indication information, and the second indication information indicates terminal-related information that the network-side device allows to be reported or terminal-related information that the network-side device does not allow to be reported; and
determining, by the terminal based on the second indication information, any one of the following:
the terminal is allowed to report the terminal-related information corresponding to the second indication information; or
the terminal is not allowed to report the terminal-related information corresponding to the second indication information.

11. The method according to any one of claims 3 to 10, wherein in a case that the target MAC subPDU is the first-type MAC subPDU or the third-type MAC subPDU, the target MAC subPDU comprises at least one piece of third indication information, and the third indication information is used for indicating at least one piece of terminal-related information; wherein
the first indication information and the third indication information are located at different positions in the MAC subheader of the target MAC subPDU.

12. The method according to claim 11, wherein the target MAC subPDU comprises multiple pieces of third indication information, and the third indication information at different positions in the MAC subheader is used for indicating different terminal-related information; or
the target MAC subPDU comprises one piece of third indication information, and the third indication information with different values is used for indicating terminal-related information of different combinations.

13. The method according to claim 11 or 12, wherein in a case that the terminal receives the first message sent by the network-side device, the method further comprises:
determining, by the terminal based on the second indication information, the third indication information in the target MAC subPDU.

14. The method according to claim 13, wherein in a case that the target MAC subPDU comprises multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

15. The method according to any one of claims 10 to 14, wherein the terminal-related information comprises at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an uplink UL CCCH service data unit SDU sent by the terminal.

16. The method according to any one of claims 3 to 15, wherein before the sending, by a terminal, a medium access control MAC PDU to a network-side device, the method further comprises:
receiving, by the terminal, fourth indication information sent by the network-side device; and
determining, by the terminal based on the fourth indication information, at least one of the following:
whether the terminal is allowed to send the first-type MAC subPDU; and
whether the terminal is allowed to send the third-type MAC subPDU.

17. The method according to any one of claims 1 to 16, wherein the first indication information is the 1st bit or the last bit of the 1st MAC subheader in the MAC PDU.

18. An information receiving method, comprising:
receiving, by a network-side device, a MAC PDU sent by a terminal, the MAC PDU comprising a target MAC subPDU; and
determining, by the network-side device, a type of the target MAC subPDU based on first indication information in a MAC subheader of the target MAC subPDU, wherein the first indication information is indication information occupying 1 bit; and the type of the target MAC subPDU comprises at least one of the following: a MAC subPDU corresponding to a CCCH; and a MAC subPDU containing a C-RNTI MAC CE.

19. The method according to claim 18, wherein the determining, by the network-side device, a type of the target MAC subPDU based on first indication information in a MAC subheader of the target MAC subPDU comprises:
determining, by the network-side device, the type of the target MAC subPDU based on the first indication information in the MAC subheader of the target MAC subPDU and ordering information of the MAC subheader of the target MAC subPDU in the MAC PDU.

20. The method according to claim 18 or 19, wherein
the MAC subPDU corresponding to the CCCH comprises at least one of the following:
a first-type MAC subPDU, wherein the first-type MAC subPDU is the MAC subPDU corresponding to the CCCH, and a MAC subheader of the first-type MAC subPDU comprises no logical channel identity LCID; and
a second-type MAC subPDU, wherein the second-type MAC subPDU is the MAC subPDU corresponding to the CCCH, and a MAC subheader of the second-type MAC subPDU comprises an LCID; and
the MAC subPDU containing the C-RNTI MAC CE comprises at least one of the following:
a third-type MAC subPDU, wherein the third-type MAC subPDU is the MAC subPDU containing the C-RNTI MAC CE, and a MAC subheader of the third-type MAC subPDU comprises no LCID; and
a fourth-type MAC subPDU, wherein the fourth-type MAC subPDU is the MAC subPDU containing the C-RNTI MAC CE, and a MAC subheader of the fourth-type MAC subPDU comprises an LCID.

21. The method according to claim 20, wherein in a case that the first indication information is a first preset value, the first indication information indicates that the target MAC subPDU is the first-type MAC subPDU.

22. The method according to claim 20 or 21, wherein in a case that the first indication information is a second preset value, the first indication information indicates that the target MAC subPDU comprises an LCID, and the LCID is used for indicating that the target MAC subPDU is the second-type MAC subPDU or the fourth-type MAC subPDU.

23. The method according to claim 21 or 22, wherein the first preset value is 1, or the second preset value is 0.

24. The method according to claim 20 or 21, wherein in a case that the first indication information is a second preset value, the first indication information indicates that the target MAC subPDU is the third-type MAC subPDU.

25. The method according to claim 21 or 24, wherein the first preset value is 1, and the second preset value is 0; or the first preset value is 0, and the second preset value is 1.

26. The method according to any one of claims 20 to 25, wherein a size of the MAC subheader of the first-type MAC subPDU is 1 byte; or
a size of the MAC subheader of the third-type MAC subPDU is 1 byte.

27. The method according to any one of claims 20 to 26, wherein before the receiving, by a network-side device, a MAC PDU sent by a terminal, the method further comprises:
sending, by the network-side device, a first message to the terminal, wherein the first message comprises at least one piece of second indication information, and the second indication information indicates terminal-related information that the network-side device allows to be reported or terminal-related information that the network-side device does not allow to be reported.

28. The method according to any one of claims 20 to 27, wherein in a case that the target MAC subPDU is the first-type MAC subPDU or the third-type MAC subPDU, the target MAC subPDU comprises at least one piece of third indication information, and the third indication information is used for indicating at least one piece of terminal-related information; wherein
the first indication information and the third indication information are located at different positions in the MAC subheader of the target MAC subPDU.

29. The method according to claim 28, wherein the target MAC subPDU comprises multiple pieces of third indication information, and the third indication information at different positions in the MAC subheader is used for indicating different terminal-related information; or
the target MAC subPDU comprises one piece of third indication information, and the third indication information with different values is used for indicating terminal-related information of different combinations.

30. The method according to claim 28 or 29, wherein in a case that the network-side device sends a first message to the terminal, and the target MAC subPDU comprises multiple pieces of third indication information, an order of the multiple pieces of third indication information in the target MAC subPDU is determined based on at least one of the following:
an order relationship specified by a protocol; and
an order relationship of the second indication information corresponding to the multiple pieces of third indication information in the first message.

31. The method according to any one of claims 27 to 30, wherein the terminal-related information comprises at least one of the following: a type of the terminal; a terminal-expected feedback manner of a random access message; channel quality information of the terminal; PUSCH retransmission request information of the terminal; PUSCH retransmission capability information of the terminal; configuration restriction status information of the terminal; and a size of an UL CCCH SDU sent by the terminal.

32. The method according to any one of claims 20 to 31, wherein before the receiving, by a network-side device, a MAC PDU sent by a terminal, the method further comprises:
sending, by the network-side device, fourth indication information to the terminal, wherein the fourth indication information is used for indicating at least one of the following:
whether the network-side device is able to receive the first-type MAC subPDU; and
whether the network-side device is able to receive the third-type MAC subPDU.

33. The method according to any one of claims 18 to 32, wherein the first indication information is the 1st bit or the last bit of the 1st MAC subheader in the MAC PDU.

34. An information sending apparatus, wherein a terminal comprises the information sending apparatus, and the apparatus comprises:
a sending module, configured to send a medium access control MAC protocol data unit PDU to a network-side device, the MAC PDU comprising a target MAC subPDU; wherein
first indication information in a MAC subheader of the target MAC subPDU is used for indicating a type of the target MAC subPDU; the first indication information is indication information occupying 1 bit; and the type of the target MAC subPDU comprises at least one of the following: a MAC subPDU corresponding to a common control channel CCCH; and a MAC subPDU containing a cell radio network temporary identifier C-RNTI MAC control element CE.

35. An information receiving apparatus, wherein a network-side device comprises the information receiving apparatus, and the apparatus comprises:
a receiving module, configured to receive a MAC PDU sent by a terminal, the MAC PDU comprising a target MAC subPDU; and
a determining module, configured to determine a type of the target MAC subPDU based on first indication information in a MAC subheader of the target MAC subPDU, wherein the first indication information is indication information occupying 1 bit; and the type of the target MAC subPDU comprises at least one of the following: a MAC subPDU corresponding to a CCCH; and a MAC subPDU containing a C-RNTI MAC CE.

36. A terminal, comprising a processor and a memory, wherein the memory stores a program or instructions capable of running on the processor, and when the program or instructions are executed by the processor, the steps of the information sending method according to any one of claims 1 to 17 are implemented.

37. A network-side device, comprising a processor and a memory, wherein the memory stores a program or instructions capable of running on the processor, and when the program or instructions are executed by the processor, the steps of the information receiving method according to any one of claims 18 to 33 are implemented.

38. A chip, wherein the chip comprises a processor and a communication interface, the communication interface is coupled to the processor, and the processor is configured to run a program or instructions to implement the steps of the information sending method according to any one of claims 1 to 17, or implement the steps of the information receiving method according to any one of claims 18 to 33.

39. A readable storage medium, wherein the readable storage medium stores a program or instructions, and when the program or instructions are executed by a processor, the steps of the information sending method according to any one of claims 1 to 17 are implemented, or the steps of the information receiving method according to any one of claims 18 to 33 are implemented.
